(19) Europäisches Patentamt
European Patent Office
Office européen des brevets

(11) **EP 2 675 578 B1**

(12) **FASCICULE DE BREVET EUROPEEN**

(45) Date de publication et mention de la délivrance du brevet:
**30.12.2015 Bulletin 2015/53**

(21) Numéro de dépôt: **12705456.7**

(22) Date de dépôt: **14.02.2012**

(51) Int Cl.:
*C01G 37/02* (2006.01)      *C04B 41/00* (2006.01)
*C01G 37/033* (2006.01)      *C04B 35/105* (2006.01)
*C04B 35/106* (2006.01)      *C04B 35/626* (2006.01)
*C04B 35/622* (2006.01)      *C04B 35/63* (2006.01)
*C04B 35/66* (2006.01)

(86) Numéro de dépôt international:
**PCT/IB2012/050668**

(87) Numéro de publication internationale:
**WO 2012/110952 (23.08.2012 Gazette 2012/34)**

(54) **PROCEDE DE FABRICATION DE GRAINS REFRACTAIRES CONTENANT DE L'OXYDE DE CHROME 3**

HERSTELLUNGSVERFAHREN VON FEUERFESTEN KÖRNERN ENTHALTEND CHROM 3 OXID

MANUFACTURING PROCESS OF REFRACTORY GRAINS CONTAINING CHROMIUM 3 OXIDE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **14.02.2011 FR 1151165**

(43) Date de publication de la demande:
**25.12.2013 Bulletin 2013/52**

(73) Titulaire: **Saint-Gobain Centre de Recherches et d'Etudes Européen**
**92400 Courbevoie (FR)**

(72) Inventeurs:
• **LINNOT, Cyril**
  **F-69007 Lyon (FR)**

• **CITTI, Olivier**
  **Wellesley, MA 02482 (US)**

(74) Mandataire: **Nony**
**3, rue de Penthièvre**
**75008 Paris (FR)**

(56) Documents cités:
**WO-A1-2005/042791      GB-A- 1 533 890**
**US-A- 4 823 359**

• **Edmund Goerenz: "Chromic Oxide Materials" In: Gerald Routschka, Hartmut Wuthnow: "Pocket Manual, Refractory Materials; 3rd Edition", 14 mai 2008 (2008-05-14), Vulkan Verlag, Essen, Germany, XP002660371, ISBN: 978-3-8027-3158-7 pages 140-146, page 140 - page 142**

**Description**

**Domaine technique**

L'invention se rapporte à des grains réfractaires frittés contenant de l'oxyde de chrome 3 ainsi qu'à un procédé de fabrication de grains réfractaires frittés contenant de l'oxyde de chrome 3 (ou $Cr_2O_3$) en plusieurs étapes à partir de produits réfractaires de départ neufs et/ou usagés contenant un ou plusieurs oxydes de chrome.

L'invention se rapporte également aux grains susceptibles d'être obtenus par ce procédé. L'invention vise encore les produits réfractaires frittés comportant lesdits grains.

**Etat de la technique**

Le chrome est un élément existant sous plusieurs degrés d'oxydation : 0, +2, +3, +4, +6.

La forme +3 est la plus répandue, comme par exemple dans l'oxyde de chrome 3 ou $Cr_2O_3$. La forme +6 peut également exister : c'est le chrome hexavalent, ou « chrome 6 », comme dans $CrO_3$.

GB 1 533 890 décrit une composition réfractaire d'alumine-chrome.

US 4 823 359 décrit un produit réfractaire dense fritté d'alumine-chrome.

WO 2005/042791 décrit un procédé permettant de transformer du chrome hexavalent en chrome trivalent.

L'article de Edmund Goerenz, « Chromic Oxide Materials » In : Gerald Routschka, Hartmut Wuthnow : « Pocket Manual, Refractory Materials ; 3rd Edition », 14 May 2008 (2008-05-14), Vulkan Verlag décrit les applications de l'oxyde chromique.

Les produits réfractaires frittés comportant de l'oxyde de chrome 3 (ou oxyde de chrome III) ou $Cr_2O_3$ sont classiquement obtenus par mélange de matières premières appropriées puis mise en forme à cru de ce mélange et cuisson de la pièce crue résultante à une température et pendant un temps suffisants pour obtenir le frittage de cette pièce crue.

Les produits réfractaires fondus comportant de l'oxyde de chrome 3 sont classiquement fabriqués par fusion, coulage dans un moule et solidification par refroidissement.

Des produits réfractaires comportant de l'oxyde de chrome 3 sont classiquement utilisés dans des applications où ils sont soumis à une agression chimique extrême, par exemple dans des fours de verrerie, en particulier comme blocs de cuve de four, ou dans des fours dans lesquels ils sont au contact d'un laitier.

Les procédés de fabrication de ces produits réfractaires génèrent des rebuts et des chutes d'usinage contenant des oxydes de chrome. Le stockage et l'élimination de ces déchets et, après utilisation, de ces produits réfractaires représentent un coût pour leurs fabricants ou leurs utilisateurs. Un objectif de la présente invention est de répondre à ce problème.

Par ailleurs, après utilisation, les produits réfractaires usagés contenant des oxydes de chrome peuvent présenter des teneurs en chrome 6 beaucoup plus importantes que celles des produits neufs. Or, le chrome 6 est une substance reconnue cancérigène, mutagène et reprotoxique pour l'homme. Il existe différentes législations fixant notamment :

- l'exposition des travailleurs aux poussières contenant du chrome 6 sur les postes de travail ;
- la limite de la quantité de chrome 6 dans les déchets.

La quantité de chrome 6 contenue dans les produits réfractaires usagés rend difficile, voire parfois impossible leur réutilisation en l'état : les moyens de protection collectives et/ou individuelles étant soit inadaptés techniquement, soit non viables économiquement. Il devient également de plus en plus difficile et onéreux d'éliminer les produits réfractaires présentant une teneur en chrome 6 supérieure à 1000 ppm.

Différentes techniques sont connues pour réduire la quantité de chrome 6 :

- contenue dans une solution aqueuse, telles que l'adsorption, la réduction-précipitation, l'électrolyse, ou la dialyse inverse ;
- contenue dans un produit sous la forme d'un bloc, telles que la réduction à l'aide d'un agent réducteur du chrome 6 comme l'acide ascorbique, les éléments carbonés, les sulfates d'ammonium ferreux, les bisulfites de sodium, le thiosulfate de sodium, le fer II, les sulfures, les composés de baryum, l'hydrazine, l'hydroxylamine, ... par exemple pulvérisé sur la surface du bloc à traiter, par traitement thermique des blocs en atmosphère réductrice (CO, Sulfure, $CO+H_2$, $N_2+H_2$, ...), fusion des blocs usagés et réduction en métal, encapsulation dans une matrice cimentaire, ...

Ces techniques présentent toutes des inconvénients :

- Les techniques de filtration sont longues et coûteuses ;
- Certaines techniques ne permettent pas d'obtenir des niveaux de pureté suffisants pour une réutilisation ;
- Certaines techniques ne peuvent pas être mises en oeuvre à échelle industrielle, car trop compliquées ;
- La plupart de ces techniques ne permettent qu'une purification temporaire, dans le sens où elles ne permettent pas d'assurer la non-reformation de chrome 6, à partir du chrome 3, lors de l'utilisation ou d'un traitement thermique ultérieur des produits purifiés ;
- Certains agents réducteurs du chrome 6 sont chers et/ou toxiques.

Un autre objectif de l'invention est de fournir un procédé permettant de traiter des produits réfractaires contenant du chrome 6 en évitant, au moins partiellement, ces inconvénients.


**Résumé de l'invention**

Un premier objet de la présente invention vise un procédé de fabrication de grains réfractaires frittés selon la revendication 1.

Comme on le verra plus en détail dans la suite, les inventeurs ont constaté que les produits réfractaires frittés, dit "finaux", obtenus à partir des grains ainsi fabriqués (particule de taille supérieure à 50 $\mu$m et inférieure à 20 mm) présentent des performances équivalentes à celles des produits selon la technique antérieure.

Le procédé de fabrication selon l'invention peut utiliser, comme produit réfractaire de départ, des produits réfractaires usagés ou neufs. Il permet ainsi de bénéficier d'une source d'oxydes de chrome économique, et d'offrir une filière de recyclage desdits produits, donc d'en limiter les quantités à traiter en tant que déchets.

Un autre avantage du procédé selon l'invention est qu'il permet de recycler, éventuellement simultanément, des produits neufs et/ou des produits usagés présentant des teneurs en oxyde de chrome 3 très différentes.

Sans vouloir être lié à une quelconque théorie, on pense que l'étape de broyage très fin en milieu liquide permet d'homogénéiser la teneur en chrome 3 dans les grains. Cette homogénéité au sein de chaque grain, à l'échelle microscopique, est possible quel que soit le produit réfractaire de départ. Le mélange des grains conduit enfin à une poudre homogène, puis, en conséquence, à des produits réfractaires finaux frittés homogènes.

Ce procédé de fabrication de grains réfractaires limite également la quantité de chrome 6 dans les grains et, de manière surprenante, limite, voire supprime, la quantité de chrome 6 formée ultérieurement dans les produits réfractaires finaux.

Un procédé selon l'invention peut encore comporter une ou plusieurs des caractéristiques optionnelles suivantes :

- A l'étape B), le produit réfractaire de départ, optionnellement concassé, représente plus de 30%, plus de 40%, plus de 50%, plus de 60%, plus de 70%, plus de 90%, voire sensiblement 100% de la masse des éléments solides contenant du $Cr_2O_3$ (particules et/ou blocs) de la charge à broyer.

- La quantité massique des particules (grains et/ou particules fines) contenant un oxyde de chrome, en particulier , est supérieure à 10%, supérieure à 20%, voire supérieure à 30% de la masse des éléments solides contenant un oxyde de chrome, respectivement contenant du $Cr_2O_3$, de la charge à broyer. Ces particules peuvent être des particules du produit réfractaire de départ, éventuellement concassé, et/ou être d'autres particules, de préférence ajoutées de façon volontaire. La quantité massique de ces autres particules peut être supérieure à 10%, supérieure à 20%, voire supérieure à 30% de la masse des éléments solides contenant un oxyde de chrome, en particulier contenant du $Cr_2O_3$.

- La charge à broyer comporte de l'alumine, éventuellement sous la forme d'une solution solide avec du $Cr_2O_3$. Dans un mode de réalisation, la charge à broyer comporte plus de 3%, plus de 10%, et/ou moins de 60%, moins de 50%, moins de 40%, moins de 30% d'alumine, en pourcentage massique sur la base des oxydes.

- A l'étape B), la charge à broyer contient une boue d'usinage comportant des particules contenant un oxyde de chrome, en particulier contenant du $Cr_2O_3$. La quantité massique des particules contenant un oxyde de chrome de ladite boue d'usinage peut être supérieure à 10%, supérieure à 20%, voire supérieure à 30% de la masse des éléments solides contenant un oxyde de chrome, voire des éléments solides contenant du $Cr_2O_3$ de la charge à broyer.

- A l'étape B), le broyage est poursuivi jusqu'à ce que la taille médiane des particules de la suspension soit inférieure à 40 $\mu$m, de préférence inférieure à 20 $\mu$m, de manière particulièrement préférée inférieure à 10 $\mu$m et/ou de préférence supérieure à 2 $\mu$m.

- Le produit réfractaire de départ est un produit fritté ou fondu ou est un mélange de morceaux en un produit fritté et de morceaux en un produit fondu.

- Le produit réfractaire de départ présente une densité apparente supérieure à 2 g/cm$^3$, voire supérieure à 2,5 g/cm$^3$, voire supérieure à 2,8 g/cm$^3$, voire supérieure à 3 g/cm$^3$.

- Le produit réfractaire de départ comporte plus de 5%, plus de 10%, plus de 15%, plus de 20%, plus de 25%, voire plus de 30% d'oxyde de chrome, en pourcentage massique sur la base des oxydes.

- Le produit réfractaire de départ comporte de l'alumine, éventuellement sous la forme d'une solution solide avec du Cr$_2$O$_3$. De préférence, le produit réfractaire de départ comporte plus de 3%, plus de 10%, et/ou moins de 60%, moins de 50%, moins de 40%, moins de 30% d'alumine, en pourcentage massique sur la base des oxydes.

- Le produit réfractaire de départ présente une teneur en chrome 6 supérieure à 100 ppm, supérieure à 150 ppm, supérieure à 300 ppm, supérieure à 500 ppm, voire supérieure à 1000 ppm.

- Toutes les dimensions du produit réfractaire de départ sont supérieures ou égales à 10 mm, de manière préférée supérieures ou égales à 50 mm, de manière préférée supérieures ou égales à 80 mm, avantageusement supérieures ou égales à 100 mm, et encore plus avantageusement supérieures ou égales à 200 mm.

- La charge à broyer comporte un élément réducteur du chrome 6, de préférence choisi parmi l'acide ascorbique, les alcools, en particulier le méthanol, l'éthanol, l'acide oxalique, les sulfates d'ammonium ferreux, les bisulfites de sodium, les thiosulfates, en particulier le thiosulfate de sodium, le thiosulfate de potassium, le thiosulfate de fer, le fer sous forme métallique, un composé dans lequel le fer est dans l'état d'oxydation 2+, les sulfures, en particulier le sulfure de fer, les composés de baryum, les composés de zinc, l'hydrazine, l'hydroxylamine, le dioxyde de soufre, le glucose, les sels dans lesquels le titane est dans l'état d'oxydation 3+, les borohydrures, les hypophosphites et leurs mélanges. De préférence, ledit élément réducteur du chrome 6 est de l'acide ascorbique. De préférence, la quantité d'élément réducteur du chrome 6 dans ladite charge à broyer est comprise entre 0,1% et 10% en masse, par rapport à la masse du produit réfractaire de départ.

- La charge à broyer comporte, en suspension et/ou en solution, un composé siliceux comportant plus de 35% en masse de silice, de préférence choisi parmi les verres comportant de la silice, en particulier les silices amorphes, les particules de silice cristallisée, la fumée de silice, et leurs mélanges. De préférence, la quantité de silice apportée par ledit composé siliceux est supérieure à 1%, supérieure à 2%, supérieure à 4%, et/ou inférieure à 10%, inférieure à 8%, inférieure à 6%, de préférence encore sensiblement égale à 5% en masse par rapport à la masse de la matière sèche de la charge à broyer.

- Le mélange de départ comporte moins de 60% en masse de particules de la suspension obtenue à l'issue de l'étape B).

- Le mélange de départ comporte un mélange de poudres d'alumine et/ou d'oxyde(s) de chrome, éventuellement sous la forme d'une solution solide, de préférence de taille médiane inférieure à 50 $\mu$m.

- La préforme obtenue à l'étape D) est un grain.

- Le frittage de l'étape F) s'effectue en conditions réductrices.

- En fin d'étape F), le corps fritté, de préférence le grain, présente une densité supérieure à 85%, de préférence supérieure à 88%, de préférence supérieure à 90%, et mieux supérieure à 92% de la densité théorique.

Un deuxième objet de la présente invention vise un grain, en particulier fabriqué ou susceptible d'avoir été fabriqué suivant un procédé selon l'invention, ledit grain présentant :

- une teneur en oxyde de chrome 3 « C », mesurée par fluorescence X, inférieure à 90%, de préférence inférieure à 80%, de préférence inférieure à 70%, voire inférieure à 65%, voire inférieure à 55%, voire inférieure à 45%, voire inférieure à 35%, voire inférieure à 25%, et
- sur une vue en coupe (après polissage), permettant l'observation d'une surface du grain de longueur supérieure à 200 $\mu$m et de largeur supérieure à 150 $\mu$m, une solution solide chrome-alumine percolante et comportant une zone d'hétérogénéité, de préférence plus d'une zone d'hétérogénéité, voire plus de deux zones d'hétérogénéité, dont la plus petite dimension est supérieure à 5 $\mu$m, voire supérieure à 10 $\mu$m et dans laquelle la teneur en oxyde de chrome est

- inférieure à C-1,5% ou supérieure à C+1,5% si C $\leq$ 30% ou
- inférieure à (1-x).C ou supérieure à (1+x).C, avec x > 0,05, voire x > 0,1, voire x > 0,2, voire x > 0,3, voire x > 0,4, voire x > 0,5, si C > 30%.

De préférence, ladite zone d'hétérogénéité présente une dimension maximale inférieure à 50 $\mu$m, inférieure à 40 $\mu$m, inférieure à 30 $\mu$m, inférieure à 20 $\mu$m, dans ladite vue en coupe.

Optionnellement, une ou plusieurs zones de phase vitreuse silicatée peuvent être observées dans ladite vue en coupe.

De préférence, la ou lesdites zones de phase vitreuse silicatée présentent une teneur en silice supérieure à 40%, de préférence supérieure à 45%, de préférence supérieure à 50%, voire supérieure à 60%.

De préférence, le grain présente, dans ladite vue en coupe, plus d'une zone, de préférence plus de deux zones, de préférence plus de trois zones de phase vitreuse silicatée présentant de préférence une forme qui s'inscrit dans un rectangle dont la longueur est supérieure ou égale à 10 $\mu$m, voire supérieure ou égale à 20 $\mu$m et dont la largeur est supérieure ou égale à 5 $\mu$m, voire supérieure ou égale à 10 $\mu$m. On appelle « longueur » et « largeur » de ladite zone la longueur du grand coté et la longueur du petit coté dudit rectangle (plus petit rectangle dans lequel ladite zone est contenue), respectivement. Ces zones sont appelées ci-après «grandes zones de phase vitreuse silicatée ».

De préférence, dans les grandes zones de phase vitreuse silicatée

- la teneur en oxyde de chrome 3 est inférieure à 3%, de préférence inférieure à 2,5%, de préférence inférieure à 2%, voire inférieure à 1,5%, ces analyses étant de préférence réalisées par pointés à l'aide d'une microsonde ;
- la teneur en oxyde de fer est supérieure à 0,5%, ces analyses étant de préférence réalisées par pointés à l'aide d'une microsonde ;
- la teneur en CaO est supérieure à 2%, ces analyses étant de préférence réalisées par pointés à l'aide d'une microsonde.

De préférence, les grandes zones de phase vitreuse silicatée contiennent de l'oxyde de bore.

Un troisième objet de la présente invention vise un grain obtenu ou susceptible d'être obtenu par un procédé selon l'invention.

Un quatrième objet de la présente invention vise une poudre comportant plus de 80%, plus de 90%, plus de 99%, de préférence sensiblement 100% de grains selon l'invention, en pourcentage en masse.

Un produit réfractaire fritté, dit "produit réfractaire final", peut être fabriqué suivant un procédé comprenant les étapes suivantes :

a) réalisation d'une charge de départ comprenant des grains fabriqués selon la présente invention en une quantité comprise entre 10% et 85% en masse sur la base de la masse des oxydes de la charge de départ,
b) mise en forme de ladite charge de départ afin d'obtenir une préforme,
c) optionnellement, séchage de la préforme ;
d) frittage de la préforme afin d'obtenir le produit réfractaire final,
e) optionnellement, finissage du produit réfractaire final.

Un objet de la présente invention vise un produit réfractaire fritté comportant entre 10 % et 85 % en masse de grains selon l'invention.

## Définitions

Un procédé selon l'invention est destiné en particulier au recyclage de produits réfractaires de départ dits « recyclés ». Un produit recyclé peut être « neuf » ou « usagé ».

On appelle produit réfractaire de départ « neuf » un produit issu d'un produit réfractaire façonné n'ayant jamais été utilisé, en particulier dans l'application prévue, ou constitué par un tel produit (rebuts, invendus, déchets de fabrication...).

On appelle produit réfractaire de départ « usagé » un produit ayant été utilisé, par exemple du fait qu'il a été mis en contact avec du verre en fusion, ou qu'il a été soumis à des gaz chauds chargés en poussières ou en éléments corrosifs.

Les matières premières (minerais, poudres d'oxydes...) ne sont donc pas des produits réfractaires de départ neufs ou usagés.

Une "poudre" est un ensemble de particules. Par « grain» on entend une particule de taille supérieure à 50 $\mu$m et inférieure à 20 mm. L'ensemble des grains est encore appelé le « granulat ».

Par « particule fine » on entend une particule de taille inférieure ou égale à 50 $\mu$m. L'ensemble des particules fines est appelé la « fraction fine ».

Un « bloc » est un élément qui n'est pas un grain, ni une particule fine.

Par « granule », on entend un aggloméré de particules élémentaires, ledit aggloméré présentant un indice de sphéricité supérieur à 0,6, c'est-à-dire se présentant sous une forme sensiblement sphérique.

L'indice de sphéricité d'une particule est le rapport entre son plus petit diamètre et son plus grand diamètre.

Par « taille d'une particule », on entend la dimension d'une particule donnée classiquement par une caractérisation de distribution granulométrique réalisée avec un granulomètre laser. Le granulomètre laser utilisé pour les exemples est un Partica LA-950 de la société HORIBA.

Les percentiles ou « centiles » 10 ($D_{10}$), 50 ($D_{50}$), et 99,5 ($D_{99,5}$) d'une poudre sont les tailles de particules correspondant aux pourcentages, en masse, de 10%, 50% et 99,5% respectivement, sur la courbe de distribution granulométrique cumulée des tailles de particules de la poudre, les tailles de particules étant classées par ordre croissant. Par exemple, 10%, en masse, des particules de la poudre ont une taille inférieure à $D_{10}$ et 90% des particules en masse ont une taille supérieure à $D_{10}$. Les tailles et les percentiles peuvent être déterminés à l'aide d'une distribution granulométrique réalisée à l'aide d'un granulomètre laser.

On appelle « taille maximale » d'une poudre, le percentile 99,5 ($D_{99,5}$) de ladite poudre. On appelle « taille médiane » ou « diamètre médian » d'une poudre », le percentile 50 ($D_{50}$) de ladite poudre.

Par « comprenant un » ou « comportant un » il y a lieu de comprendre « comprenant au moins un », sauf indication contraire.

## Brève description des figure

D'autres objets, aspects, propriétés et avantages de la présente invention apparaîtront encore à la lumière de la description et des exemples qui suivent et à l'examen du dessin annexé dans lequel :

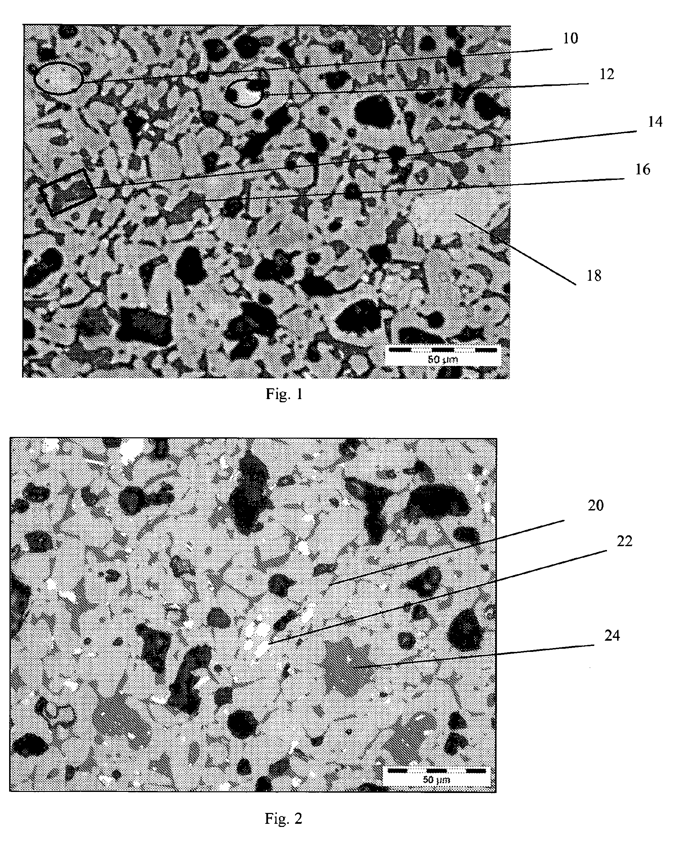

- la figure 1 représente une coupe d'un grain selon l'invention obtenu à partir d'un produit réfractaire de départ neuf :

  o les éléments de couleur gris sont des cristaux de solution solide chrome-alumine,
  o les formes de couleur noir sont de la porosité,
  o les éléments 10 et 12 sont des zones d'hétérogénéité de la solution solide chrome-alumine,
  o les éléments 14 et 16 sont des grandes zones de phase vitreuse silicatée contenant notamment de l'oxyde de chrome 3 (le rectangle dans lequel est inscrite la grande zone de phase vitreuse silicatée 14 a été représenté),
  o l'élément 18 est une trace du produit réfractaire de départ, contenant 92% de $Cr_2O_3$,
  o les éléments brillants sont des particules de zircone et/ou d'oxyde de titane ; et

- la figure 2 représente une coupe d'un grain selon l'invention obtenu à partir d'un produit réfractaire de départ usagé :

  o les éléments de couleur gris sont des cristaux de solution solide chrome-alumine,
  o les formes de couleur noir sont de la porosité,
  o l'élément 24 est une grande zone de phase vitreuse silicatée contenant de l'oxyde de chrome 3,
  o l'élément 20 est de la phase vitreuse silicatée contenant notamment de l'oxyde de chrome 3,
  o l'élément 22 est une particule de zircone.

## Description détaillée

Les produits réfractaires de départ peuvent être des produits usagés et/ou des produits neufs (notamment des rebuts de fabrication, des chutes d'usinage ou des invendus), en particulier sous la forme de blocs.

De préférence, les produits réfractaires de départ sont des matériaux réfractaires comportant plusieurs oxydes réfractaires, résultant de préférence d'une transformation par l'homme de matières premières, par exemple d'une fusion ou d'un frittage.

Les oxydes peuvent être par exemple en solution solide dans les produits réfractaires de départ.

Les produits réfractaires de départ peuvent être, en particulier, des produits frittés ou des produits fondus. Les produits réfractaires de départ peuvent être des produits façonnés secs ou frittés.

Les produits réfractaires de départ usagés, en particulier lorsqu'ils ont été en contact avec du verre en fusion, contiennent généralement du chrome 6. De préférence, ils sont donc entreposés dans un environnement clos : conteneur, sac ou « big bag » par exemple.

Les manipulations des produits réfractaires de départ, notamment usagés, qui pourraient générer des poussières sont de préférence réalisées sous aspersion d'une solution contenant un élément réducteur du chrome 6, de préférence l'acide ascorbique. Cette aspersion permet simultanément d'empêcher que les poussières éventuelles de chrome 6 ne s'envolent et de transformer une partie du chrome 6 en chrome 3.

Outre des oxydes de chrome, les produits réfractaires de départ comprennent généralement un ou plusieurs des composés suivants : $Al_2O_3$, $ZrO_2$, $SiO_2$, $TiO_2$, $B_2O_3$, MgO, CaO, $Na_2O$, $Fe_2O_3$. En particulier, le produit de départ peut être choisi parmi les produits ZIRCHROM30, ZIRCHROM50, ZIRCHROM60 et ZIRCHROM85 commercialisés par la société SAVOIE REFRACTAIRES. De préférence, les produits réfractaires de départ comportent plus de 80%, plus de 90%, plus de 95%, voire sensiblement 100% d'oxydes, en pourcentage massique.

Le procédé selon l'invention est destiné au traitement de produits réfractaires de départ dont toutes les dimensions sont supérieures ou égales à 1 mm, de préférence supérieures ou égales à 10 mm, de manière préférée supérieures ou égales à 50 mm, de manière encore préférée supérieures ou égales à 80 mm, avantageusement supérieures ou égales à 100 mm, et encore plus avantageusement supérieures ou égales à 200 mm. La forme des produits réfractaires de départ n'est cependant pas limitative. En particulier, ces produits peuvent être des poudres ou des blocs.

De préférence, le produit réfractaire de départ comporte moins de 5%, de préférence moins de 2%, voire moins de 1% d'humidité.

Etape A)

A l'étape A), la taille des produits réfractaires de départ est réduite afin d'être adaptée au broyeur mis en oeuvre à l'étape B). L'étape A) est généralement nécessaire lorsque les produits réfractaires sont sous forme de blocs.

La réduction optionnelle de la taille des produits réfractaires de départ peut être effectuée par exemple à l'aide d'un marteau pneumatique. L'équipement suivant peut être en particulier utilisé : CATERPILLAR Modèle : 303.5C CR équipée d'un brise-roches - Poids : 3 ,5T et puissance : 30 kW. En particulier si ce concassage est insuffisant, on peut également utiliser un broyeur à boulets modèle BHIL de contenance 4500 litres et de puissance 55 KW.

Si les produits réfractaires de départ contiennent du chrome 6, le concassage s'effectue, de préférence sous aspersion d'une solution d'acide ascorbique. De préférence, l'étape A) est adaptée de manière que toutes les dimensions du produit réfractaire de départ introduit dans le broyeur à l'étape B) soient inférieures à 250 mm.

Etape B)

L'étape B) consiste en un broyage d'une charge à broyer comportant ledit produit réfractaire de départ, optionnellement concassé, dans un milieu liquide afin d'obtenir, en fin de broyage, une suspension de matière sèche dont les particules présentent, pour plus de 80%, plus de 90%, plus de 95%, voire sensiblement 100% d'entre elles, une taille inférieure à 50 $\mu$m, de préférence inférieure à 20 $\mu$m, de préférence encore inférieure à 10 $\mu$m et/ou de préférence supérieure à 2 $\mu$m.

Par définition, la charge broyante, par exemple des boulets de broyage, ne fait pas partie de la charge à broyer.

L'origine des produits réfractaires de départ introduits dans le broyeur n'est pas limitative. En particulier, des produits réfractaires de départ contenant différents oxydes de chrome et/ou avec des teneurs différentes peuvent être broyés simultanément afin d'obtenir un ensemble de particules adapté aux grains à fabriquer.

La charge à broyer peut comporter des produits comportant un oxyde de chrome qui, à la différence d'un « produit réfractaire de départ », présentent au moins une dimension inférieure à 1 mm, par exemple des boues d'usinage ou des particules de petite taille, notamment des particules de petite taille générées lors du concassage du produit réfractaire de départ.

Dans un mode premier mode de réalisation, la matière sèche de la charge à broyer est constituée, pour plus de 80%, voire plus de 85%, voire plus de 90% en masse d'éléments (particules fines ou grains, blocs) comportant un oxyde de chrome. De préférence, ces éléments comportant un oxyde de chrome sont issus du produit réfractaire de départ (produit réfractaire de départ et/ou produit réfractaire de départ concassé).

Dans un deuxième mode de réalisation, la charge à broyer présente une composition correspondant à celle du corps fritté à fabriquer. Autrement dit, l'ajustement de la composition est effectué à l'étape B), et non à l'étape C). Outre les éléments comportant un oxyde de chrome, d'autres oxydes peuvent alors être ajoutés.

De préférence, et en particulier si le produit réfractaire de départ introduit dans le broyeur contient du chrome 6, et notamment plus de 100 ppm, plus de 500 ppm ou plus de 1000 ppm de chrome 6, la charge à broyer comporte un élément réducteur du chrome 6 permettant de réduire le chrome 6 en chrome 3 lors du broyage en milieu humide et comporte un composé siliceux contenant plus de 35% en masse de silice.

De préférence, ledit élément réducteur du chrome 6 est choisi parmi l'acide ascorbique, les alcools, en particulier le méthanol, l'éthanol, l'acide oxalique, les sulfates d'ammonium ferreux, les bisulfites de sodium, les thiosulfates, en particulier le thiosulfate de sodium, le thiosulfate de potassium, le thiosulfate de fer, le fer sous forme métallique, un composé dans lequel le fer est dans l'état d'oxydation 2+, les sulfures, en particulier le sulfure de fer, les composés de baryum, les composés de zinc, l'hydrazine, l'hydroxylamine, le dioxyde de soufre, le glucose, les sels dans lesquels le titane est dans l'état d'oxydation 3+, les borohydrures, les hypophosphites et leurs mélanges. De préférence, ledit élément réducteur du chrome 6 est de l'acide ascorbique.

De préférence, l'élément réducteur du chrome 6, de préférence de l'acide ascorbique, est présent en une quantité allant de 0,1% à 10%, de préférence allant de 0,5% à 5%, de manière préférée allant de 1,5% à 2%, et mieux sensiblement égale à 1,7%, en masse par rapport à la masse du produit réfractaire de départ.

Sans vouloir être lié à une quelconque théorie, on a pu constater que l'acide ascorbique acidifie la suspension et améliore la réduction du chrome 6 en chrome 3.

De préférence, le composé siliceux contient plus de 40%, de préférence plus de 50%, de préférence plus de 70% de silice, en pourcentage massique.

De manière préférée, le composé siliceux est choisi parmi les verres comportant de la silice, en particulier les silices amorphes, les particules de silice cristallisée, la fumée de silice, et leurs mélanges.

De préférence, il est présent en une quantité telle que la teneur en silice apportée par ledit composé siliceux soit comprise entre 1% et 10%, en masse par rapport à la masse du produit réfractaire de départ introduit dans le broyeur. De préférence, la teneur en silice apportée par ledit composé siliceux va de 2% à 8%, de manière préférée de 4% à 6% et mieux est d'environ 5% en masse par rapport à la masse de la matière sèche de la charge à broyer.

De préférence, la taille médiane du composé siliceux est inférieure à 200 $\mu$m, de préférence inférieure à 150 $\mu$m, de préférence inférieure à 100 $\mu$m, voire inférieure à 50 $\mu$m, voire inférieure à 10 $\mu$m, voire inférieure à 1 $\mu$m.

Le composé siliceux favorise la création d'une phase vitreuse silicatée lors du frittage à l'étape F). Sans vouloir être lié à une quelconque théorie, on estime que cette phase va piéger les particules de chromates qui pourraient se reformer et permettre ainsi une stabilisation sensiblement définitive, c'est-à-dire non réversible.

Dans un mode de réalisation préféré, le composé siliceux est de la fumée de silice. La fumée de silice, en plus de créer une vitreuse silicatée lors du frittage, va permettre de ralentir la sédimentation de la suspension lors du broyage et ainsi faciliter l'extraction de la suspension après broyage.

Le milieu liquide est généralement de l'eau. La quantité de milieu liquide utilisée est généralement comprise entre 20 et 40% en masse par rapport à la masse de la charge à broyer introduite dans le broyeur. La quantité d'eau à introduire est fonction de la technique utilisée et des constituants de la charge à broyer. La quantité d'eau à introduire relève des compétences de l'homme du métier.

De préférence, le milieu liquide et le produit réfractaire de départ représentent ensemble plus de 75%, plus de 80%, plus de 90% de la masse de la suspension. De préférence, le complément à 100% est constitué par le composé siliceux optionnel et/ou par l'élément réducteur du chrome 6 optionnel.

A la fin de l'étape B), on obtient une suspension dont les particules présentent de préférence une taille médiane inférieure à 40 $\mu$m, de préférence inférieure à 20 $\mu$m, de manière particulièrement préférée inférieure à 10 $\mu$m et/ou de préférence supérieure à 2 $\mu$m. Dans un mode de réalisation préféré, la taille médiane de la matière sèche de la suspension va de 6 à 9 $\mu$m. Avantageusement, il a été observé que cette taille médiane permet d'augmenter l'efficacité de la réduction du chrome 6 en chrome 3, mais aussi favorise la mise en oeuvre de l'étape D).

Le broyage effectué à l'étape B) permet de mélanger intimement les particules en suspension. La taille de ces particules est suffisamment réduite pour qu'il ne soit plus possible d'en retrouver les origines (produit réfractaire de départ neuf ou usagé).

De préférence, le broyage s'effectue en présence de boulets comportant du fer, ce qui permet d'introduire du fer métallique, élément réducteur du chrome 6 en chrome 3.

Les étapes C) à H) peuvent être effectuées suivant des procédés conventionnels.

Etape C

A l'étape C), les particules de la suspension obtenue en fin d'étape B) sont utilisées pour préparer le mélange de départ.

A cet effet, la suspension peut être partiellement ou complètement séchée. De préférence cependant, la suspension est utilisée sans qu'aucune opération de séchage ne soit mise en oeuvre. Dans tous les cas, le mélange de départ contient plus de 10%, de préférence plus de 20%, de préférence plus de 30% et/ou moins de 60%, de préférence moins de 50%, de préférence moins de 40% de particules de ladite suspension, en pourcentage massique du mélange de départ, en particulier lorsque la matière sèche de la charge à broyer à l'étape B) est constituée pour plus de 80% de sa masse, pour plus de 90% de sa masse, voire sensiblement entièrement constituée du produit réfractaire de départ.

Le mélange de départ peut également comporter d'autres oxydes que ceux issus de la charge à broyer, par exemple des particules de $Cr_2O_3$, $ZrO_2$, $Al_2O_3$, $TiO_2$, MgO CaO, $SiO_2$ ainsi que des particules en un mélange de ces oxydes. De préférence, les oxydes représentent plus de 80%, voire plus de 90%, voire sensiblement 100% des particules du mélange de départ. De préférence, la poudre des particules de ces oxydes réfractaires présente une taille médiane inférieure à 100 $\mu$m, de préférence inférieure à 50 $\mu$m, voire inférieure à 10 $\mu$m, voire inférieure à 5 $\mu$m.

Le complément à 100% des oxydes issus de la charge à broyer, dans le mélange de départ, est de préférence constitué de particules d'oxyde de chrome et/ou de particules d'alumine et/ou de particules de zircone et/ou de particules de magnésie et/ou de particules d'oxyde de fer et/ou de particules d'oxyde de titane et/ou de particules de silice et/ou de particules d'oxyde de calcium, et/ou de particules en un mélange de ces oxydes, les impuretés représentant de préférence moins 5%, en pourcentage en masse sur la base des oxydes. Dans ce complément à 100%, l'alumine représente de préférence plus 70%, plus de 80% de la masse des oxydes.

De préférence, le complément à 100% (en pourcentage massique sur la base des oxydes) des oxydes issus de la charge à broyer, dans le mélange de départ, est un mélange de poudres d'alumine et/ou d'oxydes de chrome, éventuellement sous la forme d'une solution solide, de préférence de taille médiane inférieure à 50 $\mu$m.

Outre les oxydes, le mélange de départ peut comporter, classiquement, des liants, de préférence temporaires et/ou des additifs de frittage, tels que ceux utilisables à l'étape a) décrite ci-après.

Etape D)

L'étape optionnelle D) consiste à mettre en forme le mélange de départ pour obtenir une préforme, de préférence en mettant en oeuvre une technique telle qu'une extrusion, une granulation ou un chamottage, de préférence en mettant en oeuvre une granulation.

Selon une première variante préférée, la préforme est un grain.

Selon une deuxième variante préférée, cette préforme est un granule.

Selon une troisième variante, la préforme est un bloc.

Etape E)

De manière optionnelle, les préformes obtenues en fin d'étape D) sont séchées au cours d'une étape E).

Le séchage est de préférence effectué à une température inférieure à 200°C, pendant une durée supérieure à 1 heure, de préférence comprise entre 2 heures et 72 heures. De préférence le séchage est effectué à une température de 110°C pendant une durée de 24 heures.

Selon une autre variante préférée, l'étape D) met en oeuvre un granulateur sécheur, par exemple un malaxeur de modèle RV15, commercialisé part la société EIRICH. Les préformes obtenues lorsqu'on met en oeuvre cette variante préférée sont des granules présentant une teneur en eau inférieure à 6%, ce qui permet avantageusement de ne pas avoir à réaliser l'étape de séchage E).

Etape F)

L'étape F) consiste en un frittage de la préforme obtenue à l'étape précédente.

De préférence, le frittage est effectué par chauffage à une température comprise entre 1100°C et 1700°C pendant une durée de préférence comprise entre 1 et 10 heures.

De préférence, le frittage des préformes est effectué à une température comprise entre 1400°C et 1700°C, de préférence comprise entre 1450°C et 1600°C.

De préférence, le temps de maintien en palier, c'est-à-dire le temps de maintien à la température requise est compris entre 1 heure et 10 heures, de préférence entre 1,5 heure et 3 heures.

Le frittage peut s'effectuer sous air, mais également en condition neutre par exemple sous azote, ou encore en condition réductrice, par exemple sous excès de monoxyde de carbone. De préférence, le frittage s'effectue en condition réductrice.

A l'issue de l'étape F), on obtient un corps fritté qui peut être sous la forme de grains, de particules fines ou de bloc, de préférence présentant une densité supérieure à 85%, de préférence supérieure à 88%, de préférence supérieure à 90%, et mieux supérieure à 92% de la densité théorique.

Etape G)

Selon une variante, en particulier lorsque l'étape F) conduit à des blocs ou à des particules trop grosses pour être réutilisées, l'étape F) peut être suivie d'une étape optionnelle G) de broyage.

Le broyage peut générer des particules fines qui, de préférence, sont séparées des grains lors d'une étape H).

Si le corps fritté obtenu à l'issue de l'étape F) est une poudre de granules, de préférence, cette étape optionnelle n'est pas mise en oeuvre.

Etape H)

Selon une variante, l'étape F) ou l'étape G) peut être suivie d'une étape optionnelle H) de sélection granulométrique.

Cette étape vise à obtenir des poudres dont la taille des particules est comprise dans une gamme précise, adaptée à l'application visée.

L'étape de sélection granulométrique est de préférence effectuée par tamisage des particules obtenues en fin d'étape F) ou en fin d'étape G).

Le procédé selon l'invention permet de préparer des poudres des grains réfractaires frittés à partir de produits réfractaires de départ contenant des oxydes de chrome neufs et/ou usagés. Ces poudres peuvent également comprendre des particules fines, qui peuvent être séparées par la sélection granulométrique.

Dans le cas où le produit réfractaire de départ contient des quantités élevées de chrome 6, notamment avec un produit réfractaire usagé, le procédé selon l'invention permet d'obtenir des grains dont la teneur en chrome 6 est faible : cette teneur en chrome 6 peut être inférieure à 100 ppm, de préférence inférieure à 10 ppm.

Grains réfractaires

Les grains selon l'invention présentent une microstructure différente de celle des grains réalisés à partir de matières premières neuves.

Les grains selon l'invention peuvent garder la trace du produit réfractaire de départ utilisé dans le procédé selon l'invention. Par exemple, ils peuvent comporter des éléments composites, notamment issus de produits réfractaires de départ frittés, comme l'élément 10 sur la figure 1. Ils peuvent également comporter des traces d'une phase vitreuse silicatée lorsque la suspension contenait un composé siliceux et/ou lorsque les produits réfractaires de départ contenaient un composé siliceux, provenant par exemple du verre avec lequel lesdits produits réfractaires étaient en contact lors de leur utilisation.

La répartition d'alumine, et/ou la présence d'oxyde de bore, et/ou la forme des zones de phase vitreuse silicatée et/ou la teneur en oxyde de chrome 3 et/ou en oxyde de fer et/ou en oxyde de calcium et/ou en oxyde de bore contenue(s) dans les grandes zones de phase vitreuse silicatée peuvent également indiquer qu'un produit réfractaire a été fabriqué selon l'invention. En particulier, la présence d'oxyde de bore peut être la signature de la présence de produits réfractaires de départ ayant été au contact de verres utilisés dans la fabrication de laine de verre, ces verres contenant habituellement de l'oxyde de bore. Ledit oxyde de bore est en général localisé dans la phase vitreuse silicatée.

De plus, les grains obtenus par un procédé selon l'invention présentent une homogénéité de leur composition inférieure à celle des grains de l'art antérieur fabriqués à partir de matières premières mais supérieure à celle des particules broyées de produits réfractaires suivant l'art antérieur.

Selon les inventeurs, la distinction entre les grains connus de l'état de la technique et les grains selon l'invention, c'est-à-dire la signature du procédé, réside dans la distribution de l'oxyde de chrome.

Un grain selon l'invention présente de préférence une teneur moyenne en oxyde de chrome 3 « C », mesurée par fluorescence X, inférieure à 90%, de préférence inférieure à 80%, de préférence inférieure à 70%, voire inférieure à 65%, voire inférieure à 55%, voire inférieure à 45%, voire inférieure à 35%, voire inférieure à 25%.

De préférence, sur une vue en coupe (après polissage) permettant l'observation d'une surface du grain de longueur supérieure à 200 $\mu$m et de largeur supérieure à 150 $\mu$m, on observe une solution solide chrome-alumine percolante, c'est-à-dire continue, et hétérogène, c'est-à-dire comportant une zone d'hétérogénéité, de préférence plus d'une zone d'hétérogénéité, voire plus de deux zones d'hétérogénéité.

Une zone d'hétérogénéité est une zone dont la plus petite dimension est supérieure à 5 $\mu$m, voire supérieure à 10 $\mu$m, et dans laquelle la teneur en oxyde de chrome est

- inférieure à C-1,5% ou supérieure à C+1,5% si C $\leq$ 30% ou
- inférieure à (1-x).C ou supérieure à (1+x).C, avec x > 0,05, voire x > 0,1, voire x > 0,2, voire x > 0,3, voire x > 0,4, voire x > 0,5, si C > 30%.

Un grain selon l'invention présente ainsi, au sein de la solution solide chrome-alumine, une répartition de l'oxyde de chrome 3 moins homogène que celle obtenue à partir de matières premières, liée au fait que ledit grain contient des produits réfractaires de départ recyclés. Un grain selon l'invention, en particulier fabriqué à partir de produits réfractaires de départ neufs, peut comporter une ou plusieurs des phases suivantes :

- une phase spinelle,
- une phase comportant du titane,
- une phase comportant de la zircone.

L'analyse de ces produits réfractaires par des méthodes de cartographie élémentaire ou de pointés par microsonde montre la présence d'un taux de chrome assez constant au sein de la solution solide chrome-alumine ou de la phase spinelle.

Les inventeurs ont observé que la taille des cristaux de solution solide chrome-alumine des grains selon l'invention est généralement plus grande que celle des grains obtenus à partir de matières premières neuves.

De préférence, la dimension du grain selon l'invention est supérieure ou égale à 0,5 mm, voire supérieure ou égale à 2 mm.

Poudre

Une poudre selon l'invention peut comporter plus de 80%, plus de 90%, plus de 99%, de préférence sensiblement 100% de grains selon l'invention, en pourcentage en masse.

De préférence la poudre selon l'invention présente :

- une taille maximale, $D_{99,5}$, inférieure ou égale à 10 mm, de préférence inférieure ou égale à 6 mm, et/ou
- un percentile 10, $D_{10}$, supérieur à 0,5 mm, voire supérieur à 1mm, voire supérieur à 1,5 mm, voire supérieur à 2 mm.

Procédé de fabrication du produit réfractaire final

Tous les procédés conventionnels peuvent être mis en oeuvre, pourvu que la charge de départ incorpore des grains selon l'invention.

A l'étape a), des particules réfractaires fines et des grains réfractaires sont mélangés (pour constituer un "mélange particulaire" selon l'invention), de préférence avec un additif de mise en forme, pour former la charge de départ. L'invention concerne également une telle charge de départ.

Le mélange particulaire de la charge de départ peut comporter plus de 15%, plus de 25%, plus de 35%, plus de 50%, plus de 60% et/ou moins de 80%, moins de 75% de grains selon l'invention, en pourcentage massique masse sur la base de la masse des oxydes.

De préférence, la charge de départ est constituée pour plus de 95%, de préférence pour plus de 97%, de préférence pour plus de 99% d'oxydes.

Un mélange particulaire (grains et particules fines) selon l'invention comporte, de préférence, plus de 15%, plus de 20%, et/ou moins de 40%, voire moins de 35%, voire moins de 30% de particules fines, en pourcentage massique par rapport au mélange particulaire, le complément étant par définition constitué de grains.

De préférence, la charge de départ présente une teneur en $Cr_2O_3 + Al_2O_3$ supérieure à 60%, de préférence supérieure à 65%, de préférence supérieure à 70%, de préférence supérieure à 80%, voire supérieure à 90%, voire supérieure à 92%, voire supérieure à 94%, en pourcentage massique sur la base des oxydes.

Dans un mode de réalisation, le mélange particulaire ne contient pas de particules de zircone.

De préférence, la quantité massique d'oxyde de chrome 3 apportée par la fraction fine est comprise entre 40% et 60%, de préférence entre 45% et 55%, de la masse d'oxyde de chrome 3 dans la charge de départ.

La fraction fine est de préférence constituée de particules d'oxyde de chrome 3 d'une part et, d'autre part, de particules d'alumine et/ou de particules de zircone et/ou de particules de magnésie et/ou de particules d'oxyde de fer et/ou de particules d'oxyde de titane et/ou de particules de silice et/ou de particules d'oxyde de calcium. De préférence, la fraction fine est constituée de particules composées d'oxyde de chrome 3 d'une part et, d'autre part, d'alumine et/ou de zircone et/ou de magnésie et/ou d'oxyde de fer et/ou d'oxyde de titane et/ou de silice et/ou d'oxyde de calcium, ou de mélanges de telles particules. Par exemple, la fraction fine peut être un mélange de particules d'oxyde de chrome 3 et de particules d'alumine, mais également être constituée des particules d'oxyde de chrome 3 et d'alumine, sous la forme par exemple d'une solution solide.

La quantité de particules fines de zircone est de préférence inférieure à 10%, de préférence inférieure à 8%, de préférence inférieure à 5%, de préférence inférieure à 3%, en pourcentage massique sur la base des oxydes du mélange particulaire (grains et particules fines).

Le granulat est de préférence constitué de grains comportant de l'oxyde de chrome 3, et notamment de grains selon l'invention, d'une part et, d'autre part, de grains d'alumine et/ou de grains de zircone et/ou de grains de magnésie et/ou de grains d'oxyde de fer et/ou de grains d'oxyde de titane et/ou de grains de silice. De préférence, le granulat est constitué de grains composés d'oxyde de chrome 3 d'une part et, d'autre part, d'alumine et/ou de zircone et/ou de magnésie et/ou d'oxyde de fer et/ou d'oxyde de titane et/ou de silice, ou de mélanges de tels grains. Par exemple, le granulat peut être un mélange de grains selon l'invention et de grains d'alumine, mais également être un mélange de grains d'oxyde de chrome 3 et d'alumine, sous la forme par exemple d'une solution solide. De préférence, les grains sont composés d'oxyde de chrome 3 d'une part et, d'autre part, d'alumine et/ou de zircone et/ou d'oxyde de titane.

Le granulat peut contenir des granules. De préférence le granulat contient plus de 60%, plus de 70%, plus de 80%, plus de 90%, voire sensiblement 100%, en pourcentage massique, de granules.

De préférence, les granules présentent un indice de sphéricité médian supérieur à 0,70, supérieur à 0,80, supérieur à 0,85, supérieur à 0,87.

De préférence, au moins 80% en masse des grains du granulat présentent une composition chimique telle que, en pourcentages massiques sur la base des oxydes et pour un total de 100% :

- $Cr_2O_3 + Al_2O_3 + ZrO_2 + MgO + Fe_2O_3 + SiO_2 + TiO_2 \geq 90\%$, de préférence $\geq 95\%$, et
- $Cr_2O_3 + Al_2O_3 + MgO \geq 60\%$, et
- $Cr_2O_3 \geq 9\%$, et
- $20\% \geq SiO_2 \geq 0,5\%$, et
- autres oxydes : $\leq 10\%$, de préférence $\leq 5\%$.

De préférence, au moins 90% en masse des grains présentent une taille supérieure à 100 $\mu$m, de préférence supérieure à 200 $\mu$m, de préférence supérieure à 300 $\mu$m, de préférence supérieure à 400 $\mu$m.

Les inventeurs ont découvert que, de manière remarquable, un produit réfractaire final comportant de tels grains présente une résistance à la corrosion élevée.

De préférence, les grains du granulat contiennent une solution solide $Cr_2O_3$-$Al_2O_3$ et/ou un spinelle à base de $Cr_2O_3$-MgO, par exemple $MgCr_2O_4$, et/ou un spinelle à base de $Cr_2O_3$-oxyde de fer, par exemple $FeCr_2O_4$, et/ou un spinelle à base d'$Al_2O_3$-MgO, par exemple $MgAl_2O_4$, et/ou un spinelle à base d'$Al_2O_3$-oxyde de fer, par exemple $FeAl_2O_4$, et leurs solutions solides.

De préférence toujours, la somme des teneurs en oxydes dans les grains du granulat représente plus de 90%, plus de 95%, voire sensiblement 100% de la masse desdits granules.

Les inventeurs ont constaté que les produits réfractaires finaux avec de telles compositions présentent une durée de vie accrue lorsqu'ils sont en contact avec du verre en fusion. Les inventeurs ont en effet observé que les « trous » à la surface en contact avec le verre en fusion, correspondant aux zones dans lesquelles l'usure est maximale, limitent la durée de vie des produits réfractaires, quelle que soient leur composition. Ils ont constaté qu'un produit fabriqué à partir de tels grains obtenus selon l'invention présente avantageusement un profil de corrosion particulièrement uniforme, ce qui expliquerait sa durée de vie supérieure.

La charge de départ peut encore contenir, en plus du mélange particulaire, au moins 0,1% en masse d'un additif de mise en forme.

L'additif peut en particulier être choisi dans le groupe constitué par :

- les argiles ;
- les plastifiants, comme le polyéthylène glycol (ou « PEG ») ou l'alcool polyvinylique (ou « APV »);
- les ciments, de préférence à haute teneur en alumine ;
- les alumines hydratables, comme la boehmite ;
- les liants dont les liants temporaires organiques tels que des résines, les lignosulfonates, la carboxyméthylcellulose ou la dextrine ;
- les défloculants, tels que des polyphosphates de métaux alcalins, des polyacrylates de métaux alcalins, des polycarboxylates ; et
- les mélanges de ces produits.

De préférence, l'additif de mise en forme est choisi dans le groupe constitué par les ciments, les défloculants, les argiles, les lignosulfonates, l'APV et leurs mélanges.

De préférence, la teneur en additif de mise en forme est inférieure à 6%, en pourcentage massique sur la base de la charge de départ.

La quantité d'eau est fonction du procédé utilisé à l'étape b). Elle est généralement comprise entre 1 et 10%, en pourcentage massique sur la base de la charge de départ sans les additifs.

La mise en forme de l'étape optionnelle b) peut être effectuée par différentes techniques parmi lesquelles on peut citer le pressage à froid, le coulage en barbotine, le vibrocoulage. Dans le cas d'une mise en forme par pressage à froid, un ajout d'une quantité d'eau comprise entre 1,5% et 4%, en pourcentage massique sur la base de la charge de départ sans les additifs, est préférée. Dans le cas d'une mise en forme faisant intervenir une liaison hydraulique, comme par exemple un coulage, un ajout d'une quantité d'eau comprise entre 3 et 7%, en pourcentage massique sur la base de la charge de départ sans les additifs, est préférée.

Un séchage peut être réalisé au cours d'une étape optionnelle c). De préférence, le séchage est effectué à une température comprise entre 100°C et 600°C, de préférence comprise entre 200°C et 350°C. Le temps de maintien à cette température est de préférence compris entre 3 heures et 100 heures.

Un frittage de la préforme est effectué au cours d'une étape d). Il est possible d'installer une préforme dans sa position définitive, notamment lorsque la préforme est destinée à être installée dans un four de fusion de verre. Ainsi ladite préforme est frittée *in situ* dans le four, après son installation, lors de la montée en température dudit four.

De préférence, la préforme est cependant frittée avant son installation définitive.

Les conditions de frittage, et en particulier la température de frittage, dépendent de la composition de la charge de départ. Habituellement, une température de frittage comprise entre 1400°C et 1700°C, de préférence comprise entre 1500°C et 1600°C est bien adaptée. De préférence, le frittage se déroule en condition oxydante, de préférence sous air. A l'issue de l'étape d), on obtient un produit réfractaire fritté, dit "final".

Le frittage conduit à des produits présentant un granulat lié par une matrice liante. Ce procédé permet avantageusement de fabriquer un produit réfractaire final fritté à base d'oxyde de chrome présentant une densité apparente comprise entre 3,1 et 4,5 g/cm$^3$, de préférence comprise entre 3,3 et 4,3 g/cm$^3$, Les modèles de compaction d'Andréasen ou de Fuller-Bolomey peuvent être utilisés pour modifier la densité apparente. De tels modèles de compaction sont notamment décrits dans l'ouvrage intitulé « Traité de céramiques et matériaux minéraux », C.A. Jouenne, Editions Septima. Paris (1984), pages 403 à 405.

Le produit réfractaire final peut subir une opération de finissage lors d'une étape optionnelle e), notamment choisie parmi un sciage, un surfaçage, un perçage, un usinage. Ces opérations peuvent être effectuées selon toutes les techniques connues de l'homme du métier. L'homme du métier saura adapter la technique en fonction de la composition du produit réfractaire final et de la forme voulue.

L'invention concerne également un produit réfractaire final fritté comportant entre 10% et 85% en masse de grains selon l'invention.

## **Exemples**

Les exemples suivants sont donnés à titre illustratif et ne limitent nullement la portée de l'invention.

Les mesures suivantes ont été réalisées :

Les mesures de la **densité apparente** et de la **porosité ouverte** d'un ensemble de particules ont été réalisées selon la méthode suivante :

- Sécher à 110°C pendant au moins 12 heures, 4 échantillons de 35 grammes constitués chacun de particules dont la taille est comprise entre 2 et 5 mm. La masse sèche de chacun des échantillons est notée $Ps_1$, $Ps_2$, $Ps_3$ et $Ps_4$. On note $Ps = Ps_1 + Ps_2 + Ps_3 + Ps_4$.
- Placer chaque échantillon dans un flacon.
- A l'aide d'une pompe à vide, faire un vide d'au moins 0,07 MPa dans chacun des flacons et maintenir ce vide pendant 7 minutes. Puis introduire de l'eau dans le flacon de façon à recouvrir les particules d'au moins 2 cm d'eau, ce qui permet aux particules d'être toujours recouvertes d'eau lors des mises sous vide suivantes.
- Refaire un vide de 0,08 MPa dans chaque flacon contenant les particules et l'eau, et maintenir ce vide pendant 7 minutes. Casser le vide.
- Refaire un vide de 0,08 MPa dans chaque flacon, et maintenir ce vide pendant 7 minutes. Casser le vide.
- Refaire un vide de 0,08 MPa dans chaque flacon, et maintenir ce vide pendant 7 minutes. Casser le vide.
- Déterminer le poids immergé de chaque échantillon, $Pi_1$, $Pi_2$, $Pi_3$ et $Pi_4$. On note $Pi = Pi_1 + Pi_2 + Pi_3 + Pi_4$.
- Verser ensuite le contenu des 4 flacons sur un tamis de mailles carrées de 2 mm afin d'éliminer l'eau. Verser ensuite les particules sur un tissu de coton sec afin d'éliminer l'excès d'eau et essuyer les particules jusqu'à ce que le lustre d'humidité ait disparu de leur surface.
- Déterminer le poids humide Ph de l'ensemble des particules.

La densité apparente de l'ensemble de particules est égale à Ps/(Ph-Pi).

La porosité ouverte de l'ensemble de particules est égale à (Ph-Ps) /(Ph-Pi).

Ces mesures sont toujours effectuées sur des ensembles de particules frittées. Elles correspondent à des mesures moyennes sur le matériau constituant les particules, c'est-à-dire ne tiennent pas compte des interstices entre les différentes particules.

Les mesures de **la densité apparente** et de la **porosité ouverte** d'un corps ou d'un produit fritté ont été réalisées sur des échantillons de dimensions 125 x 25 x 25 mm$^3$, selon la norme ISO 5017.

Les **analyses chimiques** ont été réalisées par fluorescence X en ce qui concerne les constituants dont la teneur est supérieure à 0,5%. La teneur des constituants présents en une teneur inférieure à 0,5% a été déterminée par AES-ICP (« Atomic Emission Spectoscopy-Inductively Coupled Plasma » en anglais).

Les mesures de **teneurs en chrome 6** ont été réalisées par extraction par lixiviation, selon la norme NF EN12457-2, puis la quantité de Cr6+ est obtenue par une analyse par chromatographique ionique en phase liquide.

Pour mesurer **la vitesse moyenne de corrosion,** des échantillons sous la forme de barreaux cylindriques présentant un rayon initial $r_o$ égal à 11 mm et de 100 mm de hauteur ont été prélevés et soumis à un test consistant à faire tourner les échantillons immergés dans un bain de verre C en fusion, porté à une température T de 1450°C. La vitesse de rotation des échantillons était de 6 tours par minute. Les échantillons ont été maintenus immergés pendant une durée $\Delta t$ de 120 heures. A la fin de cette période et après refroidissement, la partie d'un échantillon qui a trempé dans le verre (de hauteur H égale à 30 mm) présente une section sous la forme d'une ellipse de petit axe Pa et de grand axe Ga. Pour chaque échantillon, on détermine la valeur minimale de Pa (Pam) en mm, la valeur maximale de Pa (PaM) en mm, la valeur minimale de Ga (Gam) en mm et la valeur maximale de Ga (GaM) en mm. On fixe $Pa_{moyen}$ = (Pam+PaM)/2 et $Ga_{moyen}$=(Gam+GaM)/2. Pour chaque échantillon le volume restant moyen $Vr_{moyen}$ est déterminé par la formule $Vr_{moyen}=(\pi . H . Pa_{moyen} . Ga_{moyen})/4$. Pour chaque échantillon, le volume corrodé moyen $Vc_{moyen}$ est ensuite déterminé par la formule : $Vc_{moyen}=[(\pi . H . 22)/4] - Vr_{moyen}$.

**La vitesse moyenne de corrosion** «Vu» d'un échantillon est déterminée par la formule

$$Vu = \frac{r_0 - \sqrt{r_0^2 - (\dfrac{Vc_{moyen}}{\pi H})}}{\Delta t}.$$

Cette vitesse donne une évaluation de la résistance à la corrosion de l'échantillon testé. Ainsi, plus la vitesse de corrosion d'un échantillon sera faible, plus sa résistance à la corrosion par le verre en fusion sera élevée.

1°/ Fabrication des granules de l'exemple comparatif, G0, ne contenant pas de produits recyclés neufs ou usagés

Une charge de départ de 80 kg présentant la composition suivante est réalisée :

- 40% d'oxyde de chrome pigmentaire $Cr_2O_3$ d'une pureté supérieure à 95%, présentant une surface spécifique égale à 4m²/g et une taille médiane de 0,7 $\mu$m,
- 19% d'alumine d'une pureté supérieure à 97%, présentant une taille médiane égale à 5 $\mu$m et une surface spécifique égale à 0,8 m²/g,
- 38% d'alumine réactive d'une pureté supérieure à 99%, présentant une surface spécifique égale à 7 m²/g et une taille médiane égale à 0,6 $\mu$m,
- 1,5% d'oxyde de titane sous la forme rutile, d'une pureté supérieure à 93% et présentant une taille médiane égale à 1,5 $\mu$m,
- 1,5% de fumée de silice ER commercialisée par la Société Européenne des Produits Réfractaires (France).

Cette charge de départ est mélangée pendant 2 heures dans un mélangeur de type TUMBLER.

50 kg de la charge de départ obtenue sont ensuite introduits dans un malaxeur R08 commercialisé par la société Eirich, ainsi que 7,5 kg d'eau et 2,5 kg liant Optapix PAF35 commercialisé par la société Zschimmer & Schwarz.

L'ensemble est malaxé pendant 3 min avec une vitesse de tourbillon de 230 tr/min. Puis 18 kg de la charge de départ sont ajoutés et le malaxage est poursuivi pendant 1 min 30 à la vitesse de 460 tr/min.

Enfin, 12 kg de la charge de départ sont ajoutés et l'ensemble est malaxé pendant 1 min 30 à la vitesse de 460 tr/min. On obtient des granules qui sont déchargés.

Les granules obtenus sont ensuite séchés sous air pendant 24h à 110°C.

Les granules obtenus sont ensuite frittés à 1550°C pendant un temps de palier de 3 heures, sous air, avec une vitesse de montée en température et une vitesse de descente en température de 50°C/h.

Après frittage, les granules sont tamisés et la tranche granulométrique 0,5 - 5 mm est conservée.

A la fin de cette étape, les granules présentent les caractéristiques figurant dans le tableau 1 suivant (composition en pourcentage massique sur la base des oxydes) :

Tableau 1

| Exemple | G0 |
|---|---|
| $Cr_2O_3$ (%) | 39,6 |
| $Al_2O_3$ (%) | 53,7 |
| $ZrO_2$ (%) | 0,41 |
| $SiO_2$ (%) | 2,22 |
| Autres (%) | 4,1 |

(suite)

| Exemple | G0 |
|---|---|
| Chrome 6 (ppm) | <10 |
| Densité apparente (g/cm$^3$) | 4,12 |
| Porosité ouverte (%) | 1,3 |

2°/ Exemple de réintroduction de produits réfractaires de départ neufs : fabrication des granules G1

Etape A)

Des rebuts de production frittés et non frittés, ainsi que des chutes de sciage du produit commercialisé par la société SEFPRO sous le nom de ZIRCHROM30 ont été brisés à l'aide d'un broyeur giratoire, puis à l'aide d'un concasseur à mâchoires de façon à obtenir une charge à broyer principalement constituée de blocs dont la plus grande dimension est inférieure à 30 mm, afin de faciliter leur introduction dans la jarre de broyage de laboratoire lors de l'étape B) suivante.

Etape B)

La charge à broyer est constituée de 3,25 kg de blocs obtenus, 162 g de fumée de silice ER commercialisée par la Société Européenne des Produits Réfractaires (France) et 55 g d'acide ascorbique. Cette charge à broyer est introduite dans une jarre de broyage de 8 litres en porcelaine commercialisée par la société FAURE, placée sur un tourne-jarre de marque FAURE. Sont également introduits dans la jarre, 5,5 kg de boulets en fer de diamètre compris entre 20 mm et 40 mm, et 1,142 litre d'eau.
La charge à broyer a été broyée pendant 24 heures à une vitesse de rotation égale à 15 tr/min.
En fin de broyage, les boulets sont extraits. La matière sèche de la suspension présente alors les caractéristiques décrites dans le tableau 2 suivant :

Tableau 2

| Taille médiane ($\mu$m) | 7,6 |
|---|---|
| Composition (en pourcentages massiques sur la base des oxydes) | |
| $Cr_2O_3$ (%) | 33,5 |
| $Al_2O_3$ (%) | 38,5 |
| $ZrO_2$ (%) | 14,5 |
| $TiO_2$ (%) | 0,53 |
| $SiO_2$ (%) | 11,1 |
| CaO+MgO (%) | 0,55 |
| Autres (%) | 1,32 |
| Chrome 6 (ppm) | <10 |

Etape C)

Le mélange de départ est réalisé par mélange, dans un malaxeur Eirich RV02, de :

- 739 g de la suspension obtenue en fin d'étape B), soit 529 g de matière sèche ;
- 1206 g d'un prémélange constitué de :

  ∘ 41% d'oxyde de chrome $Cr_2O_3$ pigmentaire d'une pureté supérieure à 95%, présentant une surface spécifique égale à 4m$^2$/g et une taille médiane de 0,7 $\mu$m,
  ∘ 56,9% d'alumine réactive d'une pureté supérieure à 99%, présentant une surface spécifique égale à 7m$^2$/g et une taille médiane de 0,6 $\mu$m,
  ∘ 1,5% d'oxyde de titane sous la forme rutile, d'une pureté supérieure à 93% et présentant une taille médiane de 1,5 µm.

- 90 g de liant Optapix PAF35 commercialisé par la société Zschimmer & Schwarz ;
- de l'eau est introduite de façon à ce que la teneur finale en eau du mélange de départ soit de 20%, en pourcentage en masse sur la base de la matière sèche.

Etape D)

Le mélange de départ est ensuite malaxé pendant 1 minute, avec un tourbillon tournant à 300 tr/min et une cuve réglée à 43 tr/min afin d'obtenir un mélange homogène. La vitesse de rotation du tourbillon est ensuite augmentée jusqu'à 1050 tr/min, et une quantité supplémentaire de 900 grammes du prémélange d'oxydes est alors progressivement ajoutée en une minute. La rotation est maintenue 2 minutes après la fin de l'introduction de la quantité supplémentaire de charge. On obtient des granules qui sont déchargés.

Etape E)

Les granules obtenus sont ensuite séchés sous air pendant 24h à 110°C.

Etape F)

Les granules obtenus sont ensuite frittés à 1550°C pendant un temps de palier de 3 heures, sous air, avec une vitesse de montée en température et une vitesse de descente en température de 50°C/h.

Etape H)

Après frittage, les granules sont tamisés et la tranche granulométrique 0,5 - 5 mm est conservée.
A la fin de cette étape, les granules présentent les caractéristiques figurant dans le tableau 3 suivant (composition en pourcentage massique sur la base des oxydes) :

Tableau 3

| Exemple | G1 |
|---|---|
| $Cr_2O_3$(%) | 38,6 |
| $Al_2O_3$(%) | 50,1 |
| $ZrO_2$(%) | 5,1 |
| $SiO_2$(%) | 3,9 |
| Autres (%) | 2,3 |
| Chrome 6 (ppm) | <10 |
| Densité apparente (g/cm$^3$) | 3,79 |
| Porosité ouverte (%) | 1,34 |

Comme représenté sur la figure 1, on peut distinguer, au sein des granules G1, des traces du produit réfractaire de départ (élément 18), présentant une microstructure différente du reste du granule, des zones d'hétérogénéité 10 et 12 au sein de la solution solide chrome-alumine, ainsi que des grandes zones de phase vitreuse silicatée 14 et 16.
Le granule présente :

- une teneur en oxyde de chrome « C » égale à 38,6%,
- une solution solide chrome-alumine percolante,
- 1 zone d'hétérogénéité 10 de plus petite dimension égale à 10 µm présentant une teneur en oxyde de chrome égale à 71 %,
- 1 zone d'hétérogénéité 12 de plus petite dimension égale à 10 µm présentant une teneur en oxyde de chrome égale à 75%,
- 1 grande zone de phase vitreuse silicatée 14 présentant une teneur en silice égale à 61 %, une teneur en oxyde de chrome 3 égale à 2,1% et une teneur en oxyde de calcium égale à 3,4%,

- 1 grande zone de phase vitreuse silicatée 16 présentant une teneur en silice égale à 60%, une teneur en oxyde de chrome 3 égale à 1,9% et une teneur en oxyde de calcium égale à 4 %.

Cette hétérogénéité de la teneur en oxyde de chrome, ainsi que la présence de la phase vitreuse silicatée traduisent l'introduction d'un produit réfractaire recyclé dans la charge de départ.

3°/ Exemple de réintroduction de produits réfractaires de départ usagés : fabrication des granules G2

Etape A)

Des produits ayant été utilisés dans une cuve de four de verre d'isolation et présentant l'analyse chimique (pourcentages massiques sur la base des oxydes) figurant dans le tableau 4 ont été stockés, après démontage, dans des « big bags » clos de façon à éviter tout contact avec l'environnement extérieur. Ces produits ont été brisés, sous aspersion d'une solution aqueuse contenant 100 g/l d'acide ascorbique, à l'aide d'un brise-roches de façon à obtenir une charge à broyer principalement constituée de blocs dont la plus grande dimension est inférieure à 100 mm, afin de faciliter leur introduction dans le broyeur lors de l'étape C) suivante.

Tableau 4

| $Cr_2O_3$ (%) | $Al_2O_3$ (%) | $ZrO_2$ (%) | $TiO_2$ (%) | $SiO_2$ (%) | Autres (%) | Chrome 6 (ppm) |
|---|---|---|---|---|---|---|
| 34,4 | 49,5 | 5,6 | 0,36 | 6,0 | 4,14 | 165 ppm |

A la différence des produits de départ utilisés pour fabriquer les granules G1, le produit de départ usagé comporte plus de 100 ppm de chrome 6.

Etape B)

La charge à broyer est constituée de 150 kg de blocs obtenus en fin d'étape A), 2,55 kg d'acide ascorbique (Acide L(+)-ascorbique) commercialisé par la société VWR International, et 7,5 kg de fumée de silice commercialisée par la Société Européenne des Produits Réfractaires, cette silice vitreuse contenant plus de 93% de silice ($SiO_2$) et se présentant sous la forme d'une poudre dont les particules ont une taille comprise entre 0,1 et 5 $\mu$m et présentant une taille médiane de 0,5 $\mu$m. La charge à broyer est introduite dans un broyeur cylindrique, de 670 mm de diamètre et de 580 mm de longueur, de modèle commercialisé par la société BHIL. Sont également introduits dans le broyeur :

- 150 kg de boulets en fer de diamètre < 50 mm ;
- 52,5 litres d'eau.

La charge à broyer a été broyée pendant 24 heures à une vitesse de rotation constante de 34 tr/min.
En fin de broyage, les boulets sont extraits. La matière sèche de la suspension présente alors les caractéristiques décrites dans le tableau 5 suivant :

Tableau 5

| Taille médiane ($\mu$m) | 7 $\mu$m |
|---|---|
| Composition (en pourcentages massiques sur la base des oxydes) | |
| $Cr_2O_3$ (%) | 33,2 |
| $Al_2O_3$ (%) | 45,2 |
| $ZrO_2$ (%) | 5,4 |
| $TiO_2$ (%) | 0,33 |
| $SiO_2$ (%) | 10,8 |
| Autres (%) | 5,33 |
| Chrome 6 (ppm) | <10 ppm |

Etape C)

Le mélange de départ est réalisé par mélange, dans un malaxeur EIRICH R15 de :

- 246 kg de la suspension obtenue en fin d'étape B), soit 179,6 kg de matière sèche ;
- 225 kg d'un prémélange d'oxydes constitué de :

  ∘ 43,5% d'oxyde de chrome $Cr_2O_3$ pigmentaire d'une pureté supérieure à 95%, présentant une surface spécifique égale à $4m^2$/g et une taille médiane de 0,7 $\mu$m,
  ∘ 54,1% d'alumine réactive d'une pureté supérieure à 99%, présentant une surface spécifique égale à $7m^2$/g et une taille médiane de 0,6 $\mu$m,
  ∘ 2,4% d'oxyde de titane sous la forme rutile, d'une pureté supérieure à 93% et présentant une taille médiane de 1,5 $\mu$m ;

- 13 kg de liant Optapix PAF35 commercialisé par la société Zschimmer & Schwarz,
- Aucune eau additionnelle n'est introduite. La teneur finale en eau du mélange est de 16,5%.

Etape D)

Le mélange de départ est ensuite malaxé pendant 5 min 30 sec, avec un tourbillon tournant à 202 tr/min et une cuve réglée à 16 tr/min afin d'obtenir un mélange homogène. Une quantité supplémentaire de 200 kg du prémélange d'oxydes décrit lors de l'étape précédente est alors progressivement ajoutée en une minute. La rotation est maintenue 5 min 30 sec après la fin de l'introduction de la quantité supplémentaire de charge. On obtient des granules qui sont ensuite déchargés.

Etape E)

Les granules obtenus sont ensuite séchés sous air pendant 24h à 110°C.

Etape F)

Les granules obtenus sont ensuite frittés à 1550°C pendant un temps de palier de 3 heures, sous air, avec une vitesse de montée en température et une vitesse de descente en température de 50°C/h.

Etape H)

Après frittage, les particules sont tamisées et la tranche granulométrique 0,5 - 5 mm est conservée. En fin de cette étape, les granules présentent les caractéristiques figurant dans le tableau 6 suivant (pourcentages massiques sur la base des oxydes) :

Tableau 6

| Exemple | G2 |
|---|---|
| $Cr_2O_3$ (%) | 40,1 |
| $Al_2O_3$ (%) | 51,8 |
| $ZrO_2$ (%) | 1,6 |
| $SiO_2$(%) | 3,1 |
| Autres (%) | 3,4 |
| Chrome 6 (ppm) | <10 |
| Densité apparente (g/cm$^3$) | 3,68 |
| Porosité ouverte (%) | 1,2 |

La figure 2 est une photographie d'une coupe d'un granule G2.
Des produits réfractaires finaux frittés ont été fabriqués suivant un procédé selon l'invention.

A l'étape a), la charge de départ a été préparée en mélangeant une quantité d'eau comprise entre 4,1% et 4,7% avec un mélange particulaire selon l'invention, adapté à la composition chimique souhaitée.

Le mélange particulaire contenait 76% de grains selon l'invention en pourcentage massique par rapport à la charge de départ.

Dans les produits des exemples comparatifs, les grains selon l'invention ont été remplacés par des quantités identiques de grains de chamotte de même granulométrie et sensiblement de même analyse chimique, mais n'étant pas obtenus selon l'invention.

3% d'un additif de mise en forme (ciment alumineux CA25 commercialisé par ALMATIS) ont été ajoutés dans la charge de départ.

La fraction fine représentait 24% en masse du mélange particulaire d'oxydes, et contenait de l'oxyde de chrome pigmentaire, de l'alumine, optionnellement de la zircone et de l'additif. La fraction fine ne contenait pas de particules présentant la composition des granules G1 et G2 selon l'invention (pour les exemples selon l'invention), ni de particules présentant la composition des grains de chamotte G0 (pour les exemples hors invention). A l'étape b), la charge de départ a été mise en forme par une technique de vibrocoulage sous la forme d'une préforme aux dimensions adaptées à la mesure à effectuer.

A l'étape c), la préforme obtenue a ensuite été séchée, puis frittée lors d'une étape d) sous air à une température de 1550°C, pendant 10 heures, pour obtenir le produit final.

Le tableau 7 présente les mélanges particulaires réalisés et les résultats obtenus (pourcentages massiques sur la base des oxydes).

Tableau 7

| Exemples | 0 | 1 | 2 |
|---|---|---|---|
| **Granulats** | G0 | G1 | G2 |
| Grains de chamotte G0, 0,5 - 5 mm | 76 | | |
| Grains selon l'invention G1, 0,5 - 5 mm | | **76** | |
| Grains selon l'invention G2, 0,5 - 5 mm | | | **76** |
| **Produit final** | | | |
| $Cr_2O_3$ (%) | 43,7 | **44,9** | **47,2** |
| $Al_2O_3$ (%) | 53,3 | **49,4** | **44** |
| $ZrO_2$ (%) | < 0,1 | **2,16** | **1,7** |
| $SiO_2$ (%) | 0,85 | **1,69** | **2,5** |
| $TiO_2$ (%) | 0,99 | **0,96** | **1,3** |
| Autres (%) | 1,06 | **0,89** | **3,3** |
| Cr6+ (ppm) | <10 | **<10** | **<10** |
| Densité apparente du produit fritté ($g/cm^3$) | 3,60 | **3,61** | **3,56** |
| Porosité ouverte du produit fritté (%) | 15,8 | **16** | **17,3** |
| Vitesse moyenne de corrosion Vu, en $\mu$m/h | 9,34 | **9,8** | **9,7** |

Les inventeurs considèrent qu'une augmentation ou une diminution de la vitesse moyenne de corrosion Vu inférieure à 10% n'est pas significative.

Une comparaison du produit de l'exemple 0 (hors invention) avec les produits des exemples 1 et 2 obtenus à partir de grains selon l'invention G1 et G2 respectivement, montre des performances similaires.

Une comparaison des produits des exemples 1 et 2 montre que malgré l'utilisation de produits usagés dans la fabrication des grains G2, le produit de l'exemple 2 présente une faible teneur en chrome 6, démontrant l'efficacité du procédé selon l'invention.

Comme cela apparaît clairement à présent, le procédé de fabrication selon l'invention est remarquable dans le sens où il permet :

- la fabrication de grains à base de chrome à partir de produits neufs et/ou usagés, lesdits grains permettant la préparation de produits réfractaires finaux dont le niveau de performance, notamment la résistance à la corrosion au contact avec du verre en fusion, est au moins équivalent à ceux des produits de même type connus de l'état de la technique ;
- le recyclage de produits usagés contenant du chrome 6 en diminuant le risque d'exposition des personnes travaillant sur les postes de travail ;
- la non-réversibilité de transformation chrome 6 → chrome 3 lors de la fabrication des grains frittés et/ou lors de l'utilisation, et notamment lors de la fabrication de produits par frittage de ces grains.

Bien entendu, l'invention n'est pas limitée par les exemples, fournis à des fins illustratives seulement.

**Revendications**

1. Procédé de fabrication de grains réfractaires frittés contenant du $Cr_2O_3$ à partir d'un produit réfractaire de départ comprenant un ou plusieurs oxyde(s) de chrome, toutes les dimensions du produit réfractaire de départ étant supérieures ou égales à 1 mm, ledit procédé comprenant les étapes suivantes, dans cet ordre :

   A) optionnellement, étape de concassage du produit réfractaire de départ,
   B) broyage d'une charge à broyer comportant ledit produit réfractaire de départ, optionnellement concassé, dans un milieu liquide afin d'obtenir une suspension de particules dudit produit réfractaire de départ, ,
   C) préparation d'un mélange de départ comprenant au moins 1% en masse de particules de la suspension obtenue à l'étape précédente,
   D) mise en forme du mélange de départ sous la forme d'une préforme,
   E) optionnellement, séchage de la préforme obtenue à l'étape D),
   F) frittage de la préforme pour obtenir un corps fritté,
   G) optionnellement, broyage du corps fritté,
   H) optionnellement, sélection granulométrique,

   le procédé étant **caractérisé en ce que** le produit réfractaire de départ est fritté ou fondu ou constitué d'un mélange de morceaux en un produit fritté et de morceaux en un produit fondu, plus de 80% des particules de la suspension à l'étape B), en pourcentage de masse, présentant une taille inférieure à 50μm, les étapes D), G) et H) étant adaptées de manière que le corps fritté, optionnellement broyé à l'étape G) et/ou sélectionné à l'étape H), présente la forme d'une particule de taille supérieure à 50 μm et inférieure à 20 mm ou d'une poudre comportant de telles particules.

2. Procédé selon la revendication précédente, dans lequel, à l'étape B), le broyage est poursuivi jusqu'à ce que la taille médiane des particules de la suspension soit inférieure à 20 μm.

3. Procédé selon l'une quelconque des revendications précédentes, dans lequel le produit réfractaire de départ comporte plus de 5% d'oxyde de chrome, en pourcentage massique sur la base des oxydes, et/ou dans lequel le produit réfractaire de départ présente une teneur en chrome 6 supérieure à 100 ppm.

4. Procédé selon l'une quelconque des revendications précédentes, dans lequel la charge à broyer comporte de l'alumine, éventuellement sous la forme d'une solution solide avec du $Cr_2O_3$.

5. Procédé selon l'une quelconque des revendications précédentes, dans lequel toutes les dimensions du produit réfractaire de départ sont supérieures ou égales à 100 mm.

6. Procédé selon l'une quelconque des revendications précédentes, dans lequel ladite charge à broyer comporte un élément réducteur du chrome 6.

7. Procédé selon la revendication immédiatement précédente, dans lequel l'élément réducteur du chrome 6 est choisi parmi l'acide ascorbique, les alcools, l'acide oxalique, les sulfates d'ammonium ferreux, les bisulfites de sodium, les thiosulfates, le fer sous forme métallique, un composé dans lequel le fer est dans l'état d'oxydation 2+, les sulfures, les composés de baryum, les composés de zinc, l'hydrazine, l'hydroxylamine, le dioxyde de soufre, le glucose, les sels dans lesquels le titane est dans l'état d'oxydation 3+, les borohydrures, les hypophosphites, et leurs mélanges.

8. Procédé selon la revendication immédiatement précédente, dans lequel l'élément réducteur du chrome 6 est l'acide ascorbique.

9. Procédé selon l'une quelconque des revendications 7 à 8, dans lequel la quantité d'élément réducteur du chrome 6 dans ladite charge à broyer est comprise entre 0,1% et 10% en masse, par rapport à la masse du produit réfractaire de départ.

10. Procédé selon l'une quelconque des revendications précédentes, dans lequel ladite charge à broyer comporte un composé siliceux comportant plus de 35% en masse de silice.

11. Procédé selon la revendication précédente, dans lequel la quantité de silice apportée par ledit composé siliceux est comprise entre 1% et 10% en masse par rapport à la masse de la matière sèche de la charge à broyer.

12. Procédé selon l'une quelconque des revendications précédentes, dans lequel le produit réfractaire de départ comprend plus de 100 ppm de chrome 6 et l'étape de broyage B) est effectuée en présence, dans ledit milieu liquide, d'un élément réducteur du chrome 6 apte à réduire le chrome 6 en chrome 3 et en présence d'un composé siliceux contenant plus de 35% en masse de silice.

13. Procédé selon l'une quelconque des revendications précédentes, dans lequel le mélange de départ comporte moins de 60% en masse de particules de la suspension obtenue à l'issue de l'étape B), et/ou dans lequel le mélange de départ comporte un mélange de poudres d'alumine et/ou d'oxyde(s) de chrome, éventuellement sous la forme d'une solution solide de préférence de taille médiane inférieure à 50 $\mu$m.

14. Procédé selon l'une quelconque des revendications précédentes, dans lequel, à l'étape B), le produit réfractaire de départ, optionnellement concassé, représente plus de 50% de la masse des éléments solides contenant du $Cr_2O_3$ de la charge à broyer, et/ou la charge à broyer contient des boues d'usinage contenant des oxydes de chrome et/ou des particules contenant un oxyde de chrome non issues du produit réfractaire de départ.

15. Procédé selon l'une quelconque des revendications précédentes, dans lequel la préforme obtenue à l'étape D) est un grain.

16. Procédé selon l'une quelconque des revendications précédente, dans lequel le frittage de l'étape F) s'effectue en condition réductrice.

17. Procédé selon l'une quelconque des revendications précédentes dans lequel en fin d'étape F), le corps fritté présente une densité supérieure à 85% de la densité théorique.

18. Grain présentant une teneur en oxyde de chrome 3 « C », mesurée par fluorescence X, inférieure à 90%, **caractérisé en ce que**, sur une vue en coupe, après polissage, permettant l'observation d'une surface du grain de longueur supérieure à 200 $\mu$m et de largeur supérieure à 150 $\mu$m, une solution solide chrome-alumine percolante comportant une zone d'hétérogénéité, une zone d'hétérogénéité étant une zone dont la plus petite dimension est supérieure à 5 $\mu$m et dans laquelle la teneur en oxyde de chrome est

- inférieure à C-1,5% ou supérieure à C+1,5%, si C $\leq$ 30% ou
- inférieure à (1-x).C ou supérieure à (1+x).C, avec x > 0,05, voire x > 0,1, si C > 30%.

19. Grain selon la revendication précédente, dans lequel ladite zone d'hétérogénéité présente une dimension maximale inférieure à 50 $\mu$m dans ladite vue en coupe, et/ou dans lequel une ou plusieurs zones de phase vitreuse silicatée présentant une teneur en silice supérieure à 40% et une forme qui s'inscrit dans un rectangle dont la longueur est supérieure ou égale à 10 $\mu$m et dont la largeur est supérieure ou égale à 5 $\mu$m, sont visibles dans ladite vue en coupe et/ou dans lequel, dans ladite zone de phase vitreuse silicatée,

- la teneur en oxyde de chrome 3 est inférieure à 3% ;
- la teneur en oxyde de fer enest supérieure à 0,5% ;
- la teneur en CaO est supérieure à 2% ; et/ou
- de l'oxyde de bore est présent.

20. Poudre comportant plus de 80% de grains selon l'une quelconque des revendications 18 à 19, en pourcentage en masse.

**21.** Produit réfractaire fritté comportant entre 10 et 85%, en pourcentage massique, de grains selon l'une quelconque des revendications 18 à 19.

**Patentansprüche**

**1.** Verfahren zur Herstellung von gesinterten Feuerfestkörnern enthaltend $Cr_2O_3$ ausgehend von einem feuerfesten Ausgangsprodukt, welches ein oder mehrere Chromoxyd(e) enthält, wobei alle Dimensionen des Ausgangsfeuerfestprodukts größer oder gleich 1 mm sind und das Verfahren die folgenden Verfahrensschritte in dieser Ordnung aufweist:

A) optional einen Verfahrensschritt zum Zerkleinern des Ausgangsfeuerfestproduktes,
B) Vermahlen einer Charge zum Vermahlen, die besagtes Ausgangsfeuerfestprodukt enthält, optional zerkleinert in einem flüssigen Milieu, um eine Partikelsuspension besagten Ausgangsfeuerfestprodukts zu erhalten,
C) Zubereitung einer Ausgangsmischung mit mindestens 1 Massenprozent an Partikeln der im vorhergehenden Schritt erhaltenen Suspension,
D) Formen der Ausgangsmischung in Form einer Vorform,
E) optinal Trocknung der aus Verfahrensschritt D) erhaltenen Vorform,
F) Sintern der Vorform, um einen gesinterten Körper zu erhalten,
G) optional Vermahlen des gesinterten Körpers,
H) optional granulometrische Aufteilung,

wobei das Verfahren **dadurch gekennzeichnet ist, dass** das Ausgangsfeuerfestprodukt gesintert oder geschmolzen oder aus einer Mischung von Stücken eines gesinterten Produkts und von Stücken eines geschmolzenen Produkts besteht, wobei mehr als 80% der Partikel der Suspension aus Verfahrensschritt B) in Massenprozent eine Größe kleiner als 50 $\mu$m darstellt, und die Verfahrensschritte D), G) und H) so ausgeführt werden, dass der gesinterte Körper, optional vermahlen in Verfahrensschritt G) und/oder selektioniert im Verfahrensschritt H) die Form eines Partikels mit einer Größe größer als 50 $\mu$m und kleiner als 20 mm darstellt oder in Form eines Pulvers, welches derartige Partikel enthält.

**2.** Verfahren nach dem vorhergehenden Anspruch, in welchem im Verfahrensschritt B) das Vermahlen durchgeführt wird bis die mittlere Größe der Partikel der Suspension kleiner als 20 $\mu$m beträgt.

**3.** Verfahren nach einem der vorhergehenden Ansprüche, in welchem das Ausgangsfeuerfestprodukt mehr als 5% Chromoxyd enthält, und zwar in Massenprozenten auf der Basis von Oxyden, und/oder in dem das Ausgangsfeuerfestprodukt einen Gehalt an Chrom 6 aufweist, der größer als 100 ppm ist.

**4.** Verfahren nach einem der vorhergehenden Ansprüche, in welchem die zu vermahlende Charge Aluminiumoxyd enthält, eventuell in Form eines Mischkristalls mit $Cr_2O_3$.

**5.** Verfahren nach einem der vorhergehenden Ansprüche, in welchem alle Dimensionen des Ausgangsfeuerfestproduktes größer oder gleich 100 mm betragen.

**6.** Verfahren nach einem der vorhergehenden Ansprüche, in welchem die zu vermahlende Charge ein Reduktionselement von Chrom 6 enthält.

**7.** Verfahren nach dem unmittelbar vorhergehenden Anspruch, in welchem das Reduktionselement des Chrom 6 ausgewählt ist aus Ascorbinsäure, Alkoholen, Oxalsäure, Sulfaten von Ferroammonium, den Bisulfiten von Natrium, den Thiosulfaten, metallischem Eisen, einer Verbindung, in der das Eisen im Oxidationszustand 2+ ist, die Sulfide, die Bariumverbindungen, die Zinkverbindungen, Hydrazin, Hydroxilamin, Schwefeldioxyd, Glukose, die Salze, in welchen das Titan im Oxidationszustand 3+ ist, Borhydride, Hypophosphide und ihre Mischungen.

**8.** Verfahren nach dem unmittelbar vorhergehenden Anspruch, in welchem das Reduktionselement des Chrom 6 Ascorbinsäure ist.

**9.** Verfahren nach einem der Ansprüche 7 bis 8, in welchem die Menge des Reduktionselementes des Chrom 6 in besagter Charge zum Vermahlen zwischen 0,1 % und 10 % in der Masse liegt, im Verhältnis zur Masse des Ausgangsfeuerfestprodukts.

**10.** Verfahren nach einem der vorhergehenden Ansprüche, in welchem die Charge zum Vermahlen eine Siliciumverbindung aufweist, die mehr als 35 Massen- % von Siliciumdioxyd aufweist.

**11.** Verfahren nach dem vorhergehenden Anspruch, in welchem die Menge des durch die Siliciumverbindung gelieferten Siliciumdioxyds zwischen 1% und 10 Massen- % im Vergleich zur Masse der getrockneten Materie der Charge zum Vermahlen liegt.

**12.** Verfahren nach einem der vorhergehenden Ansprüche, in welchem das Ausgangsfeuerfestprodukt mehr als 100 ppm von Chrom 6 enthält und der Verfahrensschritt des Vermahlens B) in dem flüssigen Milieu in Anwesenheit eines Reduktionselements von Chrom 6 bewirkt wird, welches geeignet ist, Chrom 6 in Chrom 3 zu reduzieren und in Anwesenheit einer Siliciumverbindung, welche mehr als 35 Massen% an Siliciumdioxyd enthält.

**13.** Verfahren nach einem der vorhergehenden Ansprüche, in welchem die Ausgangsmischung weniger als 60 Massen% an Partikeln enthält, die aus der in Verfahrensschritt B) erhaltenen Suspension erhalten werden und/oder in welchem die Ausgangsmischung eine Mischung von Aluminiumoxydpulvern und/oder Oxyd/Oxyden von Chrom enthält, eventuell in Form eines Mischkristalls mit einer bevorzugten mittleren Größe, die kleiner als 50 $\mu$m ist.

**14.** Verfahren nach einem der vorhergehenden Ansprüche, in welchem im Verfahrensschritt B) das Ausgangsfeuerfestprodukt, optional zerkleinert, mehr als 50% der Masse der festen Elemente, die $Cr_2O_3$ aus der zu vermahlenden Charge enthalten, und/oder die zu vermahlende Charge enthält Bearbeitungsschlämme, die Chromoxyde aufweisen und/oder Partikel, die ein Chromoxyd aufweisen, das nicht vom Ausgangsfeuerfestprodukt stammt.

**15.** Verfahren nach einem der vorhergehenden Ansprüche, in welchem die aus Verfahrensschritt D) erhaltene Vorform ein Korn ist.

**16.** Verfahren nach einem der vorhergehenden Ansprüche, in welchem die Sinterung aus Verfahrensschritt F) in einer Reduktionskondition bewirkt wird.

**17.** Verfahren nach einem der vorhergehenden Ansprüche, in welchem am Ende des Verfahrensschritts F) der gesinterte Körper eine Dichte aufweist, die größer als 85% der theoretischen Dichte ist.

**18.** Korn mit einem Gehalt an Chrom 3 "C", gemessen durch Fluoreszenz X, kleiner als 90%, **dadurch gekennzeichnet, dass** es in Schnittansicht, nach Polierung, die die Beobachtung einer Kornoberfläche mit der Länge größer als 200 $\mu$m und mit der Breite größer als 150 $\mu$m erlaubt, einen perkolierenden Mischkristall von Chrom- Aluminiumoxyd mit einer Heterogenitätszone aufweist, wobei die Heterogenitätszone eine Zone ist, deren kleinste Dimension größer als 5 $\mu$m ist und in welcher der Gehalt an Chromoxyd

- kleiner als C-1,5% oder größer als C+1,5%, wenn C $\leq$ 30% oder
- kleiner als (1-x).C oder größer als (1+x).C, mit x > 0,05 bevorzugt x >0,1, wenn C > 30% ist.

**19.** Korn nach dem vorhergehenden Anspruch, in welchem die Heterogenitätszone eine maximale Dimension von kleiner als 50 $\mu$m in der Schnittansicht aufweist, und/oder in welchem eine oder mehrere Zonen einer Silikat-Glas-Phase, die einen Siliciumdioxydgehalt von größer als 40% und eine Form aufweisen, die sich in ein Rechteck einschreibt, dessen Länge größer oder gleich 10 $\mu$m und dessen Breite größer oder gleich 5 $\mu$m ist, in der Schnittansicht sichtbar sind und/oder in welchem in der Zone der Silikat-Glas-Phase:

- der Gehalt an Chrom 3 Oxyd kleiner als 3 % ist;
- der Gehalt an Eisenoxyd größer als 0,5% ist;
- der Gehalt an CaO größer als 2%; und/oder
- das Boroxyd vorhanden ist.

**20.** Pulver, welches mehr als 80% der Körner nach einem der Ansprüche 18 bis 19 in Massenprozent enthält.

**21.** Gesintertes Feuerfestprodukt, welches zwischen 10 und 85% in Massenprozent Körner nach einem der vorhergehenden Ansprüche 18 bis 19 enthält.

**Claims**

1. A process for manufacturing sintered refractory grains containing $Cr_2O_3$ from a starting refractory product comprising one or more chromium oxide(s), all the dimensions of the starting refractory product being greater than or equal to 1 mm, said process comprising the following steps, in this order:

A) optionally, step of crushing the starting refractory product,

B) milling of a charge to be milled comprising said optionally crushed starting refractory product, in a liquid medium in order to obtain a suspension of particles of said starting refractory product,

C) preparation of a starting mixture comprising at least 1% by mass of particles of the suspension obtained in the preceding step,

D) forming of the starting mixture in the form of a preform,

E) optionally, drying of the preform obtained in step D),

F) sintering of the preform to obtain a sintered body,

G) optionally, milling of the sintered body,

H) optionally, granulometric selection,

the process being **characterized in that** the starting refractory product is sintered or molten or consists of a mixture of pieces made of a sintered product and of pieces made of a molten product, **in that** more than 80% of the particles of the suspension, at step B), as a mass percentage, have a size of less than 50 $\mu$m,

steps D), G) and H) being adapted such that the sintered body, optionally milled in step G) and/or selected in step H), has the form of a particle with a size of greater than 50 $\mu$m and less than 20 mm or of a powder comprising such particles.

2. The process as claimed in the preceding claim, in which, in step B), the milling is continued until the median size of the particles of the suspension is less than 20 $\mu$m.

3. The process as claimed in any one of the preceding claims, in which the starting refractory product comprises more than 5% of chromium oxide, as a mass percentage on the basis of the oxides, and/or in which the starting refractory product has a chromium(6) content of greater than 100 ppm.

4. The process as claimed in any one of the preceding claims, in which the charge to be milled comprises alumina, optionally in the form of a solid solution with $Cr_2O_3$.

5. The process as claimed in any one of the preceding claims, in which all the dimensions of the starting refractory product are greater than or equal to 100 mm.

6. The process as claimed in any one of the preceding claims, in which said charge to be milled comprises a chromium(6)-reducing element.

7. The process as claimed in the immediately preceding claim, in which the chromium(6)-reducing element is chosen from ascorbic acid, alcohols, oxalic acid, ferrous ammonium sulfates, sodium bisulfites, thiosulfates, iron in metallic form, a compound in which iron is in oxidation state 2+, sulfides, barium compounds, zinc compounds, hydrazine, hydroxylamine, sulfur dioxide, glucose, salts in which titanium is in oxidation state 3+, borohydrides, hypophosphites, and mixtures thereof.

8. The process as claimed in the immediately preceding claim, in which the chromium(6)-reducing element is ascorbic acid.

9. The process as claimed in either of claims 7 and 8, in which the amount of chromium(6)-reducing element in said charge to be milled is between 0.1% and 10% by mass relative to the mass of the starting refractory product.

10. The process as claimed in any one of the preceding claims, in which said charge to be milled comprises a siliceous compound comprising more than 35% by mass of silica.

11. The process as claimed in the immediately preceding claim, in which the amount of silica provided by said siliceous compound is between 1% and 10% by mass relative to the mass of the dry matter of the charge to be milled.

12. The process as claimed in any one of the preceding claims, in which the starting refractory product comprises more than 100 ppm of chromium(6) and the milling step B) is performed in the presence, in said liquid medium, of a chromium(6)-reducing element that is capable of reducing chromium(6) to chromium(3) and in the presence of a siliceous compound containing more than 35% by mass of silica.

13. The process as claimed in any one of the preceding claims, in which the starting mixture comprises less than 60% by mass of particles of the suspension obtained after step B), and/or in which the starting mixture comprises a mixture of alumina and/or chromium oxide powders, optionally in the form of a solid solution, preferably with a median size of less than 50 $\mu$m.

14. The process as claimed in any one of the preceding claims, in which, in step B), the optionally crushed starting refractory product represents more than 50% of the mass of the solid elements containing $Cr_2O_3$ of the charge to be milled, and/or the charge to be milled contains machining slurries containing chromium oxides and/or particles containing a chromium oxide not derived from the starting refractory product.

15. The process as claimed in any one of the preceding claims, in which the preform obtained in step D) is a grain.

16. The process as claimed in any one of the preceding claims, in which the sintering in step F) is performed under reductive conditions.

17. The process as claimed in any one of the preceding claims, in which, at the end of step F), the sintered body has a density of greater than 85% of the theoretical density.

18. A grain having a chromium(3) oxide content "C", measured by X-ray fluorescence, of less than 90%, **characterized in that**, on a view in cross section, after polishing, allowing the observation of a surface of the grain with a length of greater than 200 $\mu$m and a width of greater than 150 $\mu$m, a percolating chromium-alumina solid solution comprising a zone of heterogeneity, a zone of heterogeneity being a zone of which the smallest dimension is greater than 5 $\mu$m and in which the chromium oxide content is

    - less than C-1.5% or greater than C+1.5%, if C $\leq$ 30% or
    - less than (1-x).C or greater than (1+x).C, with x > 0.05, or even x > 0.1, if C > 30%.

19. The grain as claimed in the preceding claim, in which said zone of heterogeneity has a maximum dimension of less than 50 $\mu$m in said view in cross section, and/or in which one or more zones of vitreous silicate phase having a silica content of greater than 40% and a form which is inscribed in a rectangle whose length is greater than or equal to 10 $\mu$m and whose width is greater than or equal to 5 $\mu$m, are visible in said view in cross section, and/or in which, in said zone of vitreous silicate phase,

    - the chromium(3) oxide content is less than 3%;
    - the iron oxide content is greater than 0.5%;
    - the CaO content is greater than 2%; and/or
    - boron oxide is present.

20. A powder comprising more than 80% of grains as claimed in any one of claims 18 to 19, as a mass percentage.

21. A sintered refractory product comprising between 10% and 85%, as a mass percentage, of grains as claimed in any one of claims 18 to 19.

Fig. 1

Fig. 2

## RÉFÉRENCES CITÉES DANS LA DESCRIPTION

**Documents brevets cités dans la description**

- GB 1533890 A
- US 4823359 A
- WO 2005042791 A

**Littérature non-brevet citée dans la description**

- Chromic Oxide Materials. **EDMUND GOERENZ.** Pocket Manual, Refractory Materials. Vulkan Verlag, 14 Mai 2008
- **C.A. JOUENNE.** Traité de céramiques et matériaux minéraux. Editions Septima, 1984, 403-405